# EUROPEAN PATENT SPECIFICATION

(11) **EP 2 587 048 B1**
(45) Date of publication and mention of the grant of the patent: **22.07.2015**
(21) Application number: 12189402.6
(22) Date of filing: 22.10.2012
(51) Int. Cl.: F03B 13/10, F03B 17/06

(54) **Power generation apparatus**
Stromerzeugungsvorrichtung
Appareil de production d'énergie

(30) Priority: 31.10.2011 JP 2011239459; 05.10.2012 JP 2012222796
(43) Date of publication of application: 01.05.2013
(73) Proprietor: ART Design Office Co., Saitama 3500041 (JP)
(72) Inventor: Kikuchi, Daisuke, Saitama, 3500041 (JP)
(74) Representative: Schmid, Wolfgang

(56) References cited:
- WO-A1-03/056169
- WO-A1-2011/098685
- JP-A- 57 206 779
- US-A1- 2008 050 993
- US-A1- 2009 230 686

## Description

### TECHNICAL FIELD

The present invention relates to a power generation apparatus which is suitable for power generation using a stream of, for example, rivers, lakes, ocean, rapids, waterfalls, and agricultural and industrial canals. The power generation apparatus has a simple structure so that it can be manufactured easily and at low costs. The power generation apparatus is small and light, and provides a stable power generation depending on the stream.

### BACKGROUND ART

Heretofore, various kinds of hydroelectric apparatus have been disclosed as a renewable energy source. These apparatus are small and can be manufactured at low costs, and installed at reduced costs.

For example, an apparatus which uses an overflow weir of an agricultural canal is disclosed. A fixed frame is installed close to the overflow weir of the irrigation canal. A water turbine unit is installed at a position close to the lower stream of the fixed frame. A runner of the water turbine unit has such a size that it is positioned below the upper water level in the upstream of the weir. This prevents the water turbine from being distinct in appearance. The runner is reduced in size so that it is received in flow of the irrigation canal (refer, for example, to Patent Document 1).

However, there are following problems. The hydroelectric apparatus requires a rigid irrigation canal, a fixed frame, a frame body, and an overflow weir. Further, the water turbine unit requires a runner having the width of the irrigation canal. Accordingly, the apparatus requires a larger water turbine unit, and therefore becomes large and heavy. The construction and equipment costs are increased.

In order to solve the above-described problems, a small hydroelectric apparatus which uses river flow directly is disclosed. The apparatus includes a screen with streaks provided on the upper stream for preventing floating objects from coming in, a penstock for taking water flow to the water turbine and provided on the lower surface, and an impulse water turbine unit rotatably supported by a stream. The screen with streaks is provided obliquely toward the stream. The rotational force of the water turbine is transmitted to the generator for power generation (refer, for example, to Patent Document 2).

Unfortunately, the hydroelectric apparatus requires a base for installation on the bottom of the river. Further, the generator, the screen with streaks, the penstock, and the water turbine need to be installed on the base. Accordingly, the equipment becomes large and heavy, and thereby increasing the construction costs and equipment costs.

In order to solve the above-mentioned problems, a power generation apparatus which uses a stream is disclosed. The power generation apparatus includes plural generator units connected via a connection wire and a current collector wire, and the generator units include rotatable drums which rotate about the shaft center for power generation. The rotatable drums are provided on the periphery with flow receiving grooves, which promote the rotation. One end of the connection wire is anchored to the predetermined position in the river. The other end, which is a free end, is floated in the stream and the rotational drums are allowed to drift. The stream acts on the rotational drums for rotation, causing the rotational drums to rotate. The power generated by the rotational drum is collected (refer, for example, to Patent Document 3).

However, it is difficult to float the power generation apparatus uniformly on the water surface against the weight of the rotational drums. Each rotational drum is rotated by each flow, but rotated in different directions. The oscillating rotational drums tend to be against the stream. Accordingly, the uniform power generation and the desired power output cannot be obtained by the rotational drums. Further, the apparatus requires a current collector wire between the generator units and the wire needs to be watertight. This makes wiring difficult and expensive. Also, a plurality of water turbine units arranged in a line with a generator unit arranged on an uppermost stream is known (refer, for example, to Patent Document 4).

### Patent Documents

[Patent Document 1] Japanese Unexamined Patent Application Publication No. 2003-269315
[Patent Document 2] Japanese Patent No. 4653036
[Patent Document 3] Japanese Unexamined Patent Application Publication No. 2009-191708 [Patent Document 4] Japanese Patent No. 57206779

### DISCLOSURE OF THE INVENTION

### PROBLEMS TO BE SOLVED BY THE INVENTION

It is an object of the present invention to solve the above-described problems and provide a power generation apparatus which is suitable for power generation using a stream of, for example, rivers, lakes, ocean, rapids, waterfalls, and agricultural or industrial canals. The apparatus has a simple structure, and thus is easy and inexpensive to manufacture. Further, the apparatus is small, light, and easy to install. The apparatus is capable of generating a stable electric power depending on the stream.

### MEANS OF SOLVING THE PROBLEMS

According to claim 1 of the present invention, a power generation apparatus includes a generator unit containing a generator anchored in an installation area, a rotational means which rotates by a stream and associated with the generator, one or plural water turbine units, each having a propeller which is rotatable by the stream, provided along the stream, and wherein the water turbine units are connected to the generator unit via a rotatable shaft, and rotational force of the propeller is associated with the generator. Accordingly, the propellers are efficiently rotated by the stream, and the generator works in a stable and efficient manner by the rotational force, and thereby obtaining a stable power generation.

According to claim 2 of the present invention, the power generation apparatus includes the generator unit and plural water turbine units. Accordingly, a stable power generation and high electric power can be obtained by the propellers of the water turbine units. According to claim 3 of the present invention, the generator unit and the water turbine units are installed in water. Accordingly, the water turbine units can be stabilized in the stream, and thereby obtaining a stable rotation of the propellers and a stable power generation.

According to claim 4 of the present invention, the generator unit and the water turbine units are allowed to drift in the stream. Accordingly, the propellers can be rotated efficiently depending on the stream, and the generator works in a stable and efficient manner by the rotational force, and thereby obtaining a stable power generation.

According to claim 5 of the present invention, the generator unit and the water turbine units are arranged in a line, and the generator unit or the water turbine units are arranged on an uppermost stream. For example, when the generator unit is located on the uppermost stream, the generator is easy to install, collect power, and requires low maintenance. When the water turbine units are located on the uppermost stream, the propellers are strongly rotated via the stream, and thereby improving the power output.

According to claim 6 of the present invention, the generator unit is arranged at the uppermost, a lowermost, or a middle position of the line. For example, when the generator unit is located on the uppermost stream, the power can be collected easily from the generator. When the generator unit is located on the lowermost stream, it can be installed easily and is easy for maintenance. When the generator unit is located on the middle position of the stream, the generator unit is prevented from moving.

According to claim 7 of the present invention, the generator unit or the water turbine units are anchored to a fixed portion in water or on a bottom of an installation area via a cable. Accordingly, the generator unit or the water turbine units are prevented from oscillating, and provide a stable operation.

According to claim 8 of the present invention, the generator unit or the water turbine units are anchored to a shore side of an installation area via a cable. Accordingly, the generator unit or the water turbine units are prevented from oscillating reliably, and provide a stable operation.

According to claim 9 of the present invention, the generator unit and the water turbine units are provided on a top with a float, and each float is provided on a water surface. Accordingly, the generator unit and the water turbine units are installed in the stream, and provide a stable operation.

According to claim 10 of the present invention, the float is connected to each other via a cable. Accordingly, each float is prevented from moving, and the generator unit and the water turbine units operate in a stable manner.

According to claim 11 of the present invention, the float on an uppermost stream is anchored in water via a cable. Accordingly, each float, the generator unit, and the water turbine units are prevented from moving.

According to claim 12 of the present invention, the generator unit and the water turbine units are oscillatably connected, and the water turbine units are oscillatably connected to each other. Accordingly, oscillation of the generator unit and the water turbine units by the stream is absorbed and allowed. Further, rotational force of the propellers of the water turbine units are reliably transmitted to the generator, and thereby obtaining a stable operation and power generation output.

According to claim 13 of the present invention, one or plural clutches provided between the generator unit and the water turbine units, and rotational force of the propeller can be interrupted. Accordingly, when trouble of water turbine units occurs or inspection of the power generation apparatus is required, for example, the corresponding clutch may be disengaged to prevent the trouble from spreading. Further, immediate action can be taken when trouble occurs or when inspection is needed.

According to claim 14 of the present invention, the generator unit and one of the water turbine units that are adjacent, and the water turbine units that are adjacent, are oscillatably connected via shaft portions, and come close to or away from each other. Accordingly, the generator unit and the water turbine units can respond to complicated displacement by the stream. Further, this absorbs and allows variations in processing accuracy and assembly accuracy of each component of the shaft portion. High degree of precision is not required, and thus, they can be manufactured and assembled easily and at low costs.

According to claim 15 of the present invention, a universal joint is interposed between the shaft portions. Accordingly, the generator unit and the water turbine units respond to complicated displacement caused by the stream, and the rotational force of the propellers can be transmitted to the generator reliably and in a stable manner.

According to claim 16 of the present invention, a spring is interposed between the shaft portions. Accordingly, this absorbs and allows variations in processing accuracy and assembly accuracy of each component of the shaft portion. High degree of precision is not required, and thus, they can be manufactured and assembled easily and at low costs.

According to claim 17 of the present invention, the power generation apparatus further includes a protective cover through which water passes, wherein the protective cover is removably attached to a stream-facing surface of a housing for receiving the respective water turbine units. Accordingly, since the small and light protective cover is used, the conventional large and heavy protective cover becomes unnecessary. The protective cover of the present invention can be manufactured easily and at low costs. Further, foreign objects can be easily removed.

According to claim 18 of the present invention, the power generation apparatus further includes a pair of support frames for supporting the float, and provided to protrude from a casing of the generator unit and a housing of the water turbine units. Accordingly, the float can be arranged accurately on the top of the casing or the housing by using the support frames.

According to claim 19 of the present invention, the pair of support frames is provided to form a V-shape, and a pair of floats is arranged on top ends of the support frames and to be parallel to each other, and the floats are connected by a pair of connecting frames. Accordingly, the floats are connected rigidly and stably by the support frames and the connecting frames.

According to claim 20 of the present invention, the support frames and the connecting frames form a truss structure. Accordingly, a pair of floats, the casing, and the housing are connected rigidly and stably, and can resist a strong water flow.

According to claim 21 of the present invention, the power generation apparatus further comprising a fin protruded from a back end of each of the floats. Accordingly, the floats can move smoothly along the stream.

According to claim 22 of the present invention, the propeller is a screw propeller or a blade propeller. Accordingly, the screw propeller can respond rapidly to changes of water amount, and the blade propeller can be made smaller. As a result, both propellers can rotate quickly.

According to claim 23 of the present invention, the screw propeller is disposed in a housing, and the blade propeller is disposed in a back end of the housing. Accordingly, the propeller can be operable safely and stably.

According to claim 24 of the present invention, a casing and the housing are disposed below middle portions of a pair of floats, and the blade propeller is disposed at a middle position of the floats in the front and back direction. Accordingly, the generator unit and the water turbine units can be installed in a stable manner, and making the design of the blade width flexible.

According to claim 25 of the present invention, the casing, the housing, and the floats are formed in a substantially bullet shape or a torpedo shape. Accordingly, flow resistance to them can be reduced. Further, the casing, the housing, and the floats can be stabilized by the stream, and thereby making power generation stable.

According to claim 26 of the present invention, the pair of support frames is provided with a weight plate having a predetermined weight, and the weight plate is movable up and down. Accordingly, the center of gravity of the generator unit is adjustable depending on the water depth of the casing or the housing, and a stable position of the generator unit can be obtained. According to claim 27 of the present invention, the power generation apparatus further includes a swivel link, wherein the swivel link has one end connected in water or to a bottom of the installation area, and the swivel link can be raised or tilted, wherein the swivel link has the other end rotatably connected to the generator unit or the water turbine units, wherein the swivel link is normally tilted and located in water, and is raised when desired, to move a top portion above a water surface, and the generator unit or the water turbine units appear above the water surface. Accordingly, during inspection of the generator unit and the water turbine units, or when debris attached to the protective cover of the water turbine units is removed, the generator unit and the water turbine units appear above the water surface so that the maintenance can be carried out easily.

According to claim 28 of the present invention, one end of the swivel link is supported by a flat base plate which is installed in water or on a bottom of the installation area along a stream, and one end of the swivel link can be raised or tilted, and the other end is rotatably connected to the generator unit or the water turbine units. Accordingly, the generator unit and the water turbine units can appear above the water surface by the operation of the swivel link, and the maintenance can be carried out easily.

According to claim 29 of the present invention, end portions of plural swivel links are provided on a base plate at equal intervals, the respective swivel links are identical in length, distances between ends of adjacent swivel links are identical, and the generator unit and the water turbine units can be submerged into water at a time. Accordingly, a pair of swivel links and a pair of links that connect both ends of the swivel links constitute a quadric crank chain mechanism, and operating angle of each swivel link is identical. The generator unit and plural water turbine units are submerged into water at a time. As a result, maintenance can be carried out quickly, and power generation can be restarted rapidly.

According to claim 30 of the present invention, the power generation apparatus further includes an operational rod having one end connected to the swivel link in an upper stream, the other end provided with a float which floats on the water surface, wherein the swivel link can be raised or tilted via the operational rod. Accordingly, the float is floated on the water surface on the upper stream, and the location of the operational rod is visible. Further, the operational rod can be operated easily, and the link mechanism operable by the operational rod is reliably achieved.

According to claim 31 of the present invention, the water turbine units on a lower stream gradually become larger. Accordingly, the volume and weight of the water turbine unit is increased to add flow resistance. Further, the movement of the water turbine units on the lower stream is restricted. The generator unit and the plural water turbine units are installed in water orderly and in a stable manner.

According to claim 32 of the present invention, the water turbine units are divided into groups, the water turbine units in each group are provided on a single rotatable shaft, and rotatable shafts of adjacent groups are oscillatably connected to each other. Accordingly, oscillation of each water turbine unit is restricted, and movement of every group is facilitated. Further, the positions of the water turbine units can be stabilized.

According to claim 33 of the present invention, the water turbine units are provided with plural support legs, the support legs are movably installed on a bottom of the installation area, and at least one support leg is provided with an anchor for preventing movement of the water turbine units. Accordingly, the water turbine units can be installed at the bottom of the installation area easily and in a stable manner.

According to claim 34 of the present invention, a generator unit is provided with plural support legs, the support legs are movably installed on the bottom of the installation area, and at least one support leg is provided with an anchor for preventing movement of the generator unit. Accordingly, the generator unit can be installed at the bottom of the installation area easily and in a stable manner.

According to claim 35 of the present invention, the generator unit and the water turbine units are installed in rivers, lakes, ocean, rapids, waterfalls, and channels. Accordingly, a renewable energy source can be utilized effectively in nature or by man-made facilities.

### EFFECTS OF THE INVENTION

According to claim 1 of the present invention, a power generation apparatus includes one or plural water turbine units, each having a propeller which is rotatable by the stream, provided along the stream, and wherein the water turbine units are connected to the generator unit via a rotatable shaft, and rotational force of the propeller is associated with the generator.

Accordingly, the propellers are efficiently rotated by the stream, and the generator works in a stable and efficient manner by the rotational force, and thereby obtaining a stable power generation.

According to claim 2 of the present invention, the power generation apparatus includes the generator unit and plural water turbine units. Accordingly, a stable power generation and high electric power can be obtained by the propellers of the water turbine units. According to claim 3 of the present invention, the generator unit and the water turbine units are installed in water. Accordingly, the water turbine units can be stabilized in the stream, compared with a case in which the water turbine units are installed on the water surface, and thereby obtaining a stable rotation of the propellers and a stable power generation.

According to claim 4 of the present invention, the generator unit and the water turbine units are allowed to drift in the stream. Accordingly, the propellers can be rotated efficiently depending on streams, and the generator works in a stable and efficient manner by the rotational force, and thereby obtaining a stable power generation.

According to claim 5 of the present invention, the generator unit and the water turbine units are arranged in a line, and the generator unit or the water turbine units are arranged on an uppermost stream. For example, when the generator unit is located on the uppermost stream, the generator is easy to install, collect power, and requires low maintenance. When the water turbine units are located on the uppermost stream, the propellers are strongly rotated via the stream, and thereby improving the power output.

According to claim 6 of the present invention, the generator unit is arranged at the uppermost, a lowermost, or a middle position of the line. For example, when the generator unit is located on the uppermost stream, the power can be collected easily from the generator. When the generator unit is located on the lowermost stream, it can be installed easily and is easy for maintenance. When the generator unit is located on the middle position of the stream, the generator unit is prevented from moving.

According to claim 7 of the present invention, the generator unit or the water turbine units are anchored to a fixed portion in water or on a bottom of an installation area via a cable. Accordingly, the generator unit or the water turbine units are prevented from oscillating, and provide a stable operation.

According to claim 8 of the present invention, the generator unit or the water turbine units are anchored to a shore side of an installation area via a cable. Accordingly, the generator unit or the water turbine units are prevented from oscillating reliably, and provide a stable operation.

According to claim 9 of the present invention, the generator unit and the water turbine units are provided on a top with a float, and each float is provided on a water surface. Accordingly, the generator unit and the water turbine units are installed in the stream, and provide a stable operation.

According to claim 10 of the present invention, the float is connected to each other via a cable. Accordingly, each float is prevented from moving, and the generator unit and the water turbine units operate in a stable manner.

According to claim 11 of the present invention, the float on an uppermost stream is anchored in water via a cable. Accordingly, each float, the generator unit, and the water turbine units are prevented from moving.

According to claim 12 of the present invention, the generator unit and the water turbine units are oscillatably connected, and the water turbine units are oscillatably connected to each other. Accordingly, oscillation of the generator unit and the water turbine units by the stream is absorbed and allowed. Further, rotational force of the propellers of the water turbine units are reliably transmitted to the generator, and thereby obtaining a stable operation and power generation output.

According to claim 13 of the present invention, one or plural clutches provided between the generator unit and the water turbine units, and rotational force of the propeller can be interrupted. Accordingly, when trouble of water turbine units occurs or inspection of the power generation apparatus is required, for example, the corresponding clutch may be disengaged to prevent the trouble from spreading. Further, immediate action can be taken when trouble occurs or when inspection is needed.

According to claim 14 of the present invention, the generator unit and one of the water turbine units that are adjacent, and the water turbine units that are adjacent, are oscillatably connected via shaft portions, and come close to or away from each other. Accordingly, the generator unit and the water turbine units can respond to complicated displacement by the stream. Further, this absorbs and allows variations in processing accuracy and assembly accuracy of each component of the shaft portion. High degree of precision is not required, and thus, they can be manufactured and assembled easily and at low costs.

According to claim 15 of the present invention, a universal joint is interposed between the shaft portions. Accordingly, the generator unit and the water turbine units respond to complicated displacement caused by the stream, and the rotational force of the propellers can be transmitted to the generator reliably and in a stable manner.

According to claim 16 of the present invention, a spring is interposed between the shaft portions. Accordingly, this absorbs and allows variations in processing accuracy and assembly accuracy of each component of the shaft portion. High degree of precision is not required, and thus, they can be manufactured and assembled easily and at low costs.

According to claim 17 of the present invention, the power generation apparatus further includes a protective cover through which water passes, wherein the protective cover is removably attached to a stream-facing surface of a housing for receiving the respective water turbine units. Accordingly, since the small and light protective cover is used, the conventional large and heavy protective cover becomes unnecessary. The protective cover of the present invention can be manufactured easily and at low costs. Further, foreign objects can be easily removed.

According to claim 18 of the present invention, the power generation apparatus further includes a pair of support frames for supporting the float, and provided to protrude from a casing of the generator unit and a housing of the water turbine units. Accordingly, the float can be arranged accurately on the top of the casing or the housing by using the support frames.

According to claim 19 of the present invention, the pair of support frames is provided to form a V-shape, and a pair of floats is arranged on top ends of the support frames and to be parallel to each other, and the floats are connected by a pair of connecting frames. Accordingly, the float is connected rigidly and stably by the support frames and the connecting frames.

According to claim 20 of the present invention, the support frames and the connecting frames form a truss structure. Accordingly, a pair of floats, the casing, and the housing are connected rigidly and stably, and can resist a strong water flow.

According to claim 21 of the present invention, the power generation apparatus further comprising a fin protruded from a back end of each of the floats. Accordingly, the floats can move smoothly along the stream.

According to claim 22 of the present invention, the propeller is a screw propeller or a blade propeller. Accordingly, the screw propeller can respond rapidly to changes of water amount, and the blade propeller can be made smaller. As a result, both propellers can rotate quickly.

According to claim 23 of the present invention, the screw propeller is disposed in a housing, and the blade propeller is disposed in a back end of the housing. Accordingly, the propeller can be operable safely and stably.

According to claim 24 of the present invention, a casing and the housing are disposed below middle portions of a pair of floats, and the blade propeller is disposed at a middle position of the floats in the front and back direction. Accordingly, the generator unit and the water turbine units can be installed in a stable manner, and making the design of the blade width flexible.

According to claim 25 of the present invention, the casing, the housing, and the floats are formed in a substantially bullet shape or a torpedo shape. Accordingly, flow resistance to them can be reduced. Further, the casing, the housing, and the floats can be stabilized by the stream, and thereby making power generation stable.

According to claim 26 of the present invention, the pair of support frames is provided with a weight plate having a predetermined weight, and the weight plate is movable up and down. Accordingly, the center of gravity of the generator unit is adjustable depending on the water depth of the casing or the housing, and a stable position of the generator unit can be obtained.

According to claim 27 of the present invention, the power generation apparatus further includes a swivel link, wherein the swivel link has one end connected in water or to a bottom of the installation area, and the swivel link can be raised or tilted, wherein the swivel link has the other end rotatably connected to the generator unit or the water turbine units, wherein the swivel link is normally tilted and located in water, and is raised when desired, to move a top portion above a water surface, and the generator unit or the water turbine units appear above the water surface. Accordingly, during inspection of the generator unit and the water turbine units, or when debris attached to the protective cover of the water turbine units is removed, the generator unit and the water turbine units appear above the water surface so that the maintenance can be carried out easily.

According to claim 28 of the present invention, one end of the swivel link is supported by a flat base plate which is installed in water or on a bottom of the installation area along a stream, and one end of the swivel link can be raised or tilted, and the other end is rotatably connected to the generator unit or the water turbine units. Accordingly, the generator unit and the water turbine units can appear above the water surface by the operation of the swivel link, and the maintenance can be carried out easily.

According to claim 29 of the present invention, end portions of plural swivel links are provided on a base plate at equal intervals, the respective swivel links are identical in length, distances between ends of adjacent swivel links are identical, and the generator unit and the water turbine units can be submerged into water at a time. Accordingly, a pair of swivel links and a pair of links that connect both ends of the swivel links constitute a quadric crank chain mechanism, and operating angle of each swivel link is identical. The generator unit and plural water turbine units are submerged into water at a time. As a result, maintenance can be carried out quickly, and power generation can be restarted rapidly.

According to claim 30 of the present invention, the power generation apparatus further includes an operational rod having one end connected to the swivel link in an upper stream, the other end provided with a float which floats on the water surface, wherein the swivel link can be raised or tilted via the operational rod. Accordingly, the float is floated on the water surface on the upper stream, and the location of the operational rod is visible. Further, the operational rod can be operated easily, and the link mechanism operable by the operational rod is reliably achieved.

According to claim 31 of the present invention, the water turbine units on a lower stream gradually become larger. Accordingly, the volume and weight of the water turbine unit is increased to add flow resistance. Further, the movement of the water turbine units on the lower stream is restricted. The generator unit and the plural water turbine units are installed in water orderly and in a stable manner.

According to claim 32 of the present invention, the water turbine units are divided into groups, the water turbine units in each group are provided on a single rotatable shaft, and rotatable shafts of adjacent groups are oscillatably connected to each other. Accordingly, oscillation of each water turbine unit is restricted, and movement of every group is facilitated. Further, the positions of the water turbine units can be stabilized.

According to claim 33 of the present invention, the water turbine units are provided with plural support legs, the support legs are movably installed on a bottom of the installation area, and at least one support leg is provided with an anchor for preventing movement of the water turbine units. Accordingly, the water turbine units can be installed at the bottom of the installation area easily and in a stable manner.

According to claim 34 of the present invention, a generator unit is provided with plural support legs, the support legs are movably installed on the bottom of the installation area, and at least one support leg is provided with an anchor for preventing movement of the generator unit. Accordingly, the generator unit can be installed at the bottom of the installation area easily and in a stable manner.

According to claim 35 of the present invention, the generator unit and the water turbine units are installed in rivers, lakes, ocean, rapids, waterfalls, and channels. Accordingly, a renewable energy source can be utilized effectively in nature or by man-made facilities.

### BRIEF DESCRIPTION OF THE DRAWINGS

Fig. 1 is an elevation view showing the generator unit and the water turbine units, applied to the present invention, floated on the river.
Fig. 2 is a partially enlarged cross-sectional view on the uppermost stream of Fig. 1.
Fig. 3 is an enlarged plan view of Fig. 2.
Fig. 4 is a side view of the generator unit applied to the present invention.
Fig. 5 is an exploded cross-sectional view of the shaft portions of the water turbine units on the uppermost stream applied to the present invention.
Fig. 6 is a side view, observed from the upper stream, of the water turbine unit applied to the present invention.
Fig. 6(a) shows a state in which a protective net attached to the housing is in use.
Fig. 6(b) shows a state in which the protective net is removed from the housing.
Fig. 7 is an exploded elevation view of the universal joint applied to the present invention.
Fig. 8 is an exploded perspective view of the universal joint applied to the present invention.
Fig. 9 is a cross-sectional view taken along line A-A in Fig. 9.
Fig. 10 is an exploded perspective view of the connecting portion of the rotatable shaft and the intermediate shaft applied to the present invention.
Fig. 11 is a cross-sectional view of the connecting portion of the rotatable shaft and the intermediate shaft applied to the present invention.
Fig. 12 is a plan view of the generator unit and the water turbine units, applied to the present invention, floated in the river. Each float is not shown.
Fig. 13 is an elevation view of the feature of a second embodiment of the present invention, and is a partial cross-sectional view.
Fig. 14 is an elevation view of a third embodiment of the present invention.
Fig. 15 is an elevation view of a fourth embodiment of the present invention.
Fig. 16 is an elevation view of a fifth embodiment of the present invention, and showing a state in which the power generation apparatus is installed in rapids, streams, or waterfalls.
Fig. 17 is a plan view showing a sixth embodiment of the present invention, and showing the power generation apparatus installed in the agricultural or industrial canal.
Fig. 18 is an enlarged exploded view of the feature of a sixth embodiment.
Fig. 19 is an enlarged cross-sectional view taken along line B-B in Fig. 17.
Fig. 20(a) is an enlarged cross-sectional view taken along line C-C in Fig. 17. Fig. 20 (b) is the generator unit and the water turbine unit installed in the channel by using cables or steel plates bent in a substantially Z-shape.
Fig. 21 is an elevation view showing a seventh embodiment of the present invention.
Fig. 22 is an elevation view of an eighth embodiment of the present invention. The generator unit and the water turbine unit can be submerged into the water.
Fig. 23 is an elevation view of a ninth embodiment of the present invention.
Fig. 24 is an elevation view of a tenth embodiment of the present invention.
Fig. 25 is an elevation view of an eleventh embodiment of the present invention. The generator unit and the water turbine units are provided on the bottom of the installation area, with the floats removed.
Fig. 26 shows the water turbine unit and the support legs, applied to the embodiment of Fig. 25, are installed.
Fig. 27 is an elevation view of the water turbine unit, observed from the upper stream, applied to the embodiment of Fig. 25.
Fig. 28 is an elevation view of the water turbine unit, observed from the lower stream, applied to the embodiment of Fig. 25.
Fig. 29 is a perspective view of a twelfth embodiment of the present invention and showing a state in which the generator unit and the water turbine units using a tidal current or ocean current are installed.
Fig. 30 is a perspective view of a water turbine unit applied to the twelfth embodiment.
Fig. 31 is a perspective view of a water turbine unit applied to the twelfth embodiment and observed from another direction.
Fig. 32 is an elevation view applied to the twelfth embodiment.
Fig. 33 is a plan view applied to the twelfth embodiment.

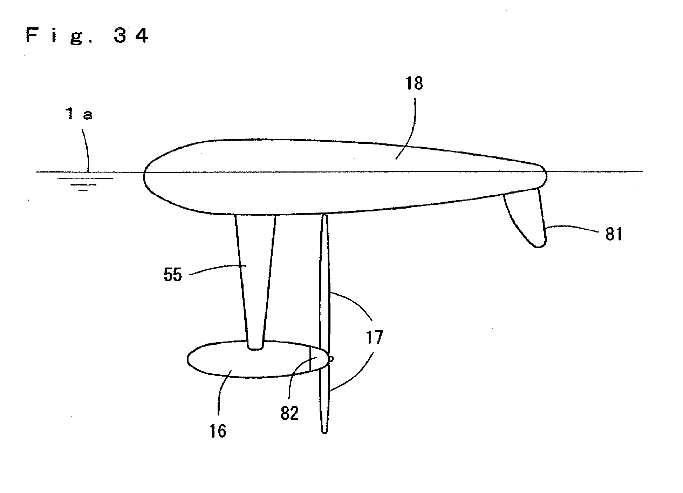

Fig. 34 is a side view applied to the twelfth embodiment.

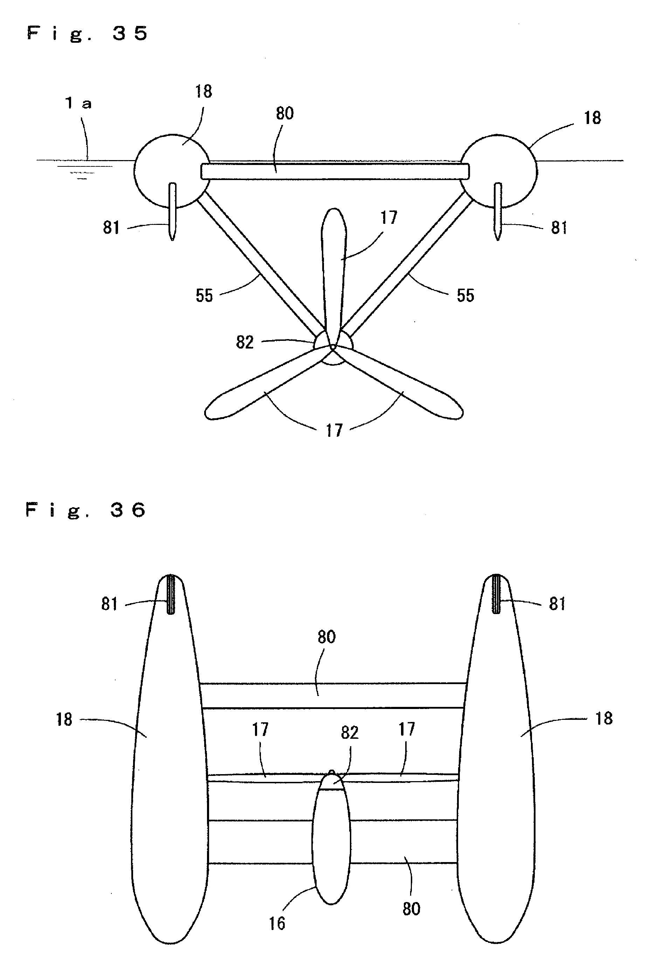

Fig. 35 is a back view applied to the twelfth embodiment.
Fig. 36 is a bottom view applied to the twelfth embodiment.

### BEST MODE FOR CARRYING OUT THE INVENTION

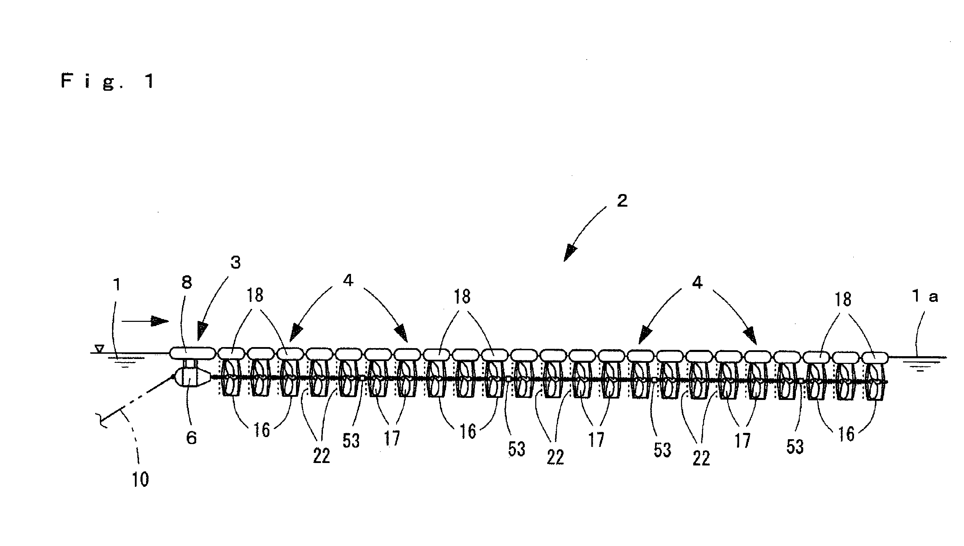

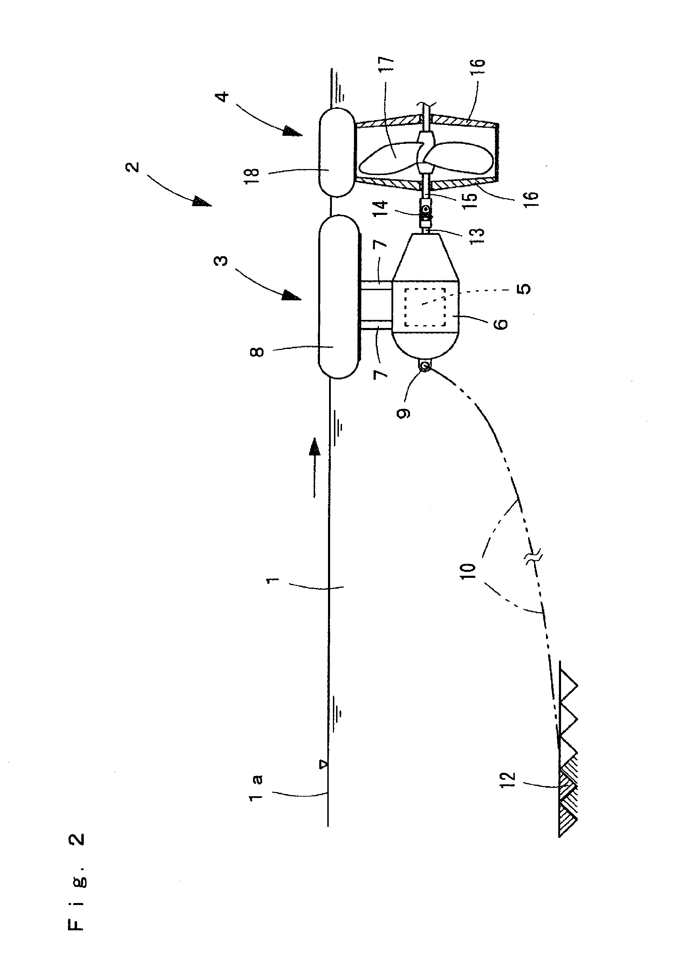

Embodiments of the present invention applied to a power generation apparatus using a stream of rivers will be described below with reference to the drawings. Figs. 1 through 12 illustrate a river 1, a power generation apparatus 2 floated below a water surface 1a in an installation area. The power generation apparatus 2 includes a generator unit 3 and plural water turbine units 4. The generator unit 3 is disposed on the uppermost stream, or the front end of the power generation apparatus 2. The water turbine units 4 are connected to the back end of the generator unit 3, or the lower stream, and are oscillatable.

In this case, the generator unit 3, the water turbine units 4, and other components are waterproof by using waterproof material, rustproof metal, or plastic.

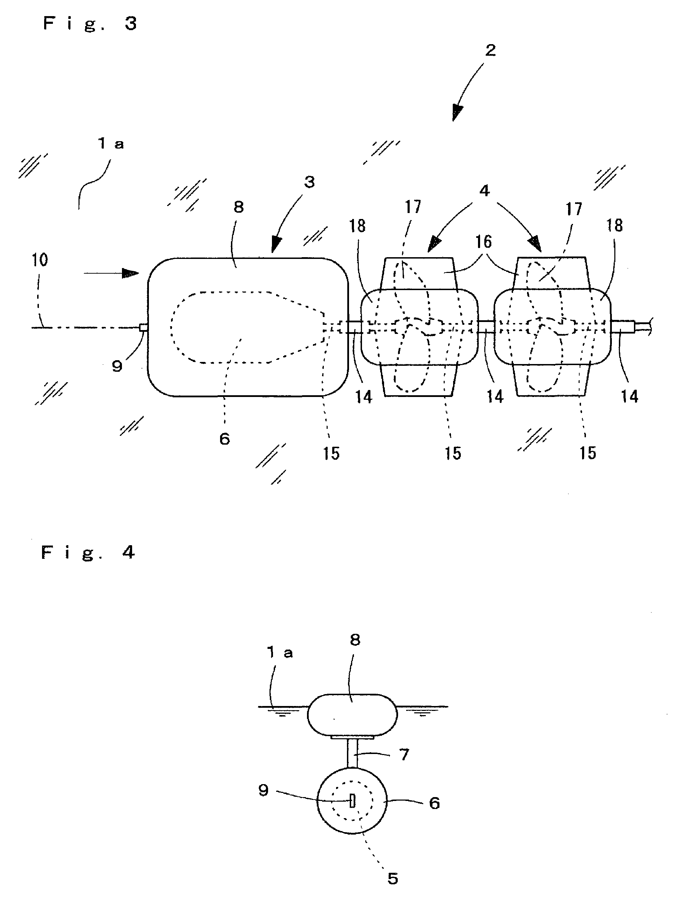

The generator unit 3 includes a rigid casing 6. The casing 6 is made of plastic, contains a generator 5, and has a substantially bullet shape. A pair of support frames 7 is provided upright on the upper periphery of the casing 6, and a float 8 is provided on the top of the support frame 7. The float 8 is made from plastic or foamed plastic, and has a substantially hollow box shape. The float 8 has a larger rectangular flat surface than the casing 6 as shown in Fig. 3. The casing 6 which contains the generator 5 is positioned immediately below the water surface 1a by the buoyancy of the float 8. The top portion of the float 8 is floated on the water surface 1a.

In drawings, reference numeral 9 denotes a projection provided on the front end of the casing 6. One end of a cable 10 is fixed to the projection 9. The cable 10 is made of plastic or steel, which is light, flexible, and waterproof. The other end of the cable 10 is fixed to an anchoring member 12 on the bottom of the river. A current collector wire (not shown) is provided along the cable 10.

A terminal rotatable shaft 13 is rotatably projected from the back end of the casing 6, and associated with the generator 5.

A rotatable shaft 15 is rotatably connected to the terminal rotatable shaft 13 via a shaft coupling 14, which is a universal joint. The rotatable shaft 15 is associated with the water turbine units 4. In the embodiments, the rotatable shafts 13, 15 have the same diameter.

The water turbine units 4 have substantially the same structure. Each unit 4 is structured by a propeller water turbine. The unit 4 includes a hollow cylindrical housing 16 through which water passes, a propeller 17 rotatably supported within the housing 16, and a float 18 provided at the top of the housing 16.

The housing 16 includes plural support frames 19 on the front and back ends. Bearings 20, 20 are provided in the bosses fixed at the center of the support frames 19. The rotatable shaft 15 is rotatably supported between the bearings 20, 20.

The propeller 17 in the embodiment is a screw propeller and has three blades, the base ends of the blades are fixed to a spindle 21. The spindle 21 is fixed to the rotatable shaft 15 in the housing 16.

In drawings, reference numeral 22 denotes a mesh-like protective cover 22 removably attached to the periphery on the upper stream of the housing 16. Thus, invasion of foreign objects in the water stream can be prevented, and further, the foreign objects can be removed easily.

In this case, the protective cover 22 is attached to both surfaces on the upper and lower stream of the housing 16 so that invasion of the foreign objects can be prevented.

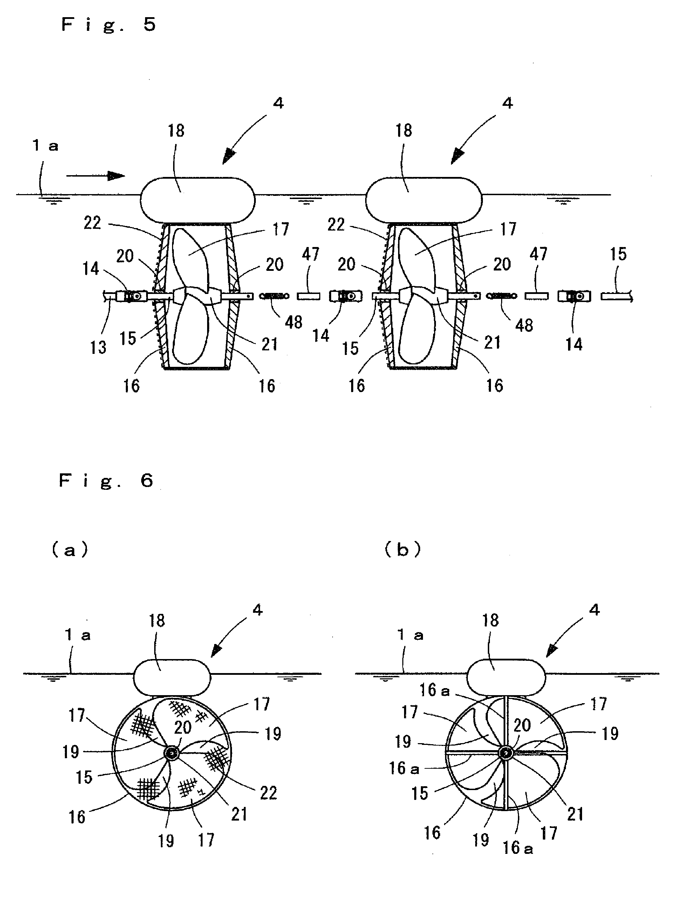

Instead of attaching the protective cover 22 to the housing 16 all the time, for example, plural of rod-like protectors 16a may be radially attached to both sides of the housing 16. The mesh-like protective cover 22, which is either a large-meshed net or a fine net, is removably attached to the outer side of the protector 16a. When the water in the installation area is clean, the protective cover 22 may be removed as shown in Fig. 6(b) in order to prevent decrease in water power to the propellers 17 and power output. An appropriate mesh is selected depending on the degree of pollution or foreign objects floated in the installation area, and thereby enabling to remove foreign objects. The protective cover 22 attached effectively can prevent decrease in water power and power generation output.

The float 18 is made of plastic or foamed plastic, and has a hollow box shape. The float 18 has a smaller volume than that of the float 8. The buoyancy of the float 18 keeps the housing 16 which contains the propellers 17 immediately below the water surface 1a. The top of the float 18 floats on the water surface 1a. The rotatable shaft 15 is normally positioned coaxially with and on the horizontal surface with the rotatable shaft 13 on the upper stream.

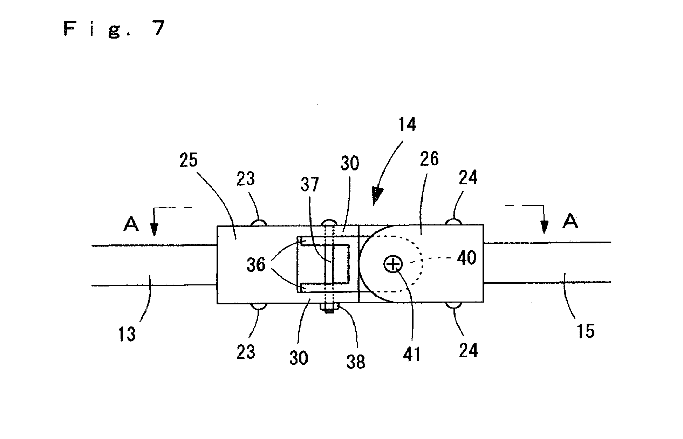

The shaft coupling 14 is provided between the back end of the terminal rotatable shaft 13 or an intermediate shaft, as described later, and the front end of the rotatable shaft 15 is protruded outside of the water turbine units 4. As shown in Figs. 7 through 9, the shaft coupling 14 is provided between joint blocks 25, 26 and the joint blocks 25, 26. The joint blocks 25, 26 are made of plastic and secured to the end portions of the rotatable shafts 13, 15 respectively via screws 23, 24. The shaft coupling 14 includes an intermediate joint 27 made of plastic, and the blocks 25, 26 are oscillatably connected each other via the intermediate joint 27.

A concave hole 28 is formed at one end of the joint block 25 and the rotatable shaft 13 is insertable therein. A pair of engaging pieces 30, each having a pin hole 29, is protruded from the other end of the joint block 25. The joint block 26 includes a concave hole 31 at one end and the rotatable shaft 15 is insertable therein, a slide groove 32 formed at the other end, and the pair of side plates 34 formed to face each other and each plate having pin hole 33, on both sides of the slide groove 32.

The intermediate joint 27 has a substantially inverted-U cross section and includes the pair of engaging plates 36 disposed to face each other, each having a pin hole 35 at one end. The plates 36, 36 are disposed inside the engaging piece 30 and a pin 37 is inserted into the pin holes 29, 35. A nut 38 is threaded onto the rod end. The joint block 25 is rotatably connected about the pin 37.

Meanwhile, the other end of the intermediate joint 27 is provided with a protruded pivot plate 40 having a pin hole 39. The pivot plate 40 is inserted into the slide groove 32, and a pin 41 is inserted into the pin holes 33, 39. A nut 42 is threaded onto the rod end. The joint block 26 is rotatably connected about the pin 41.

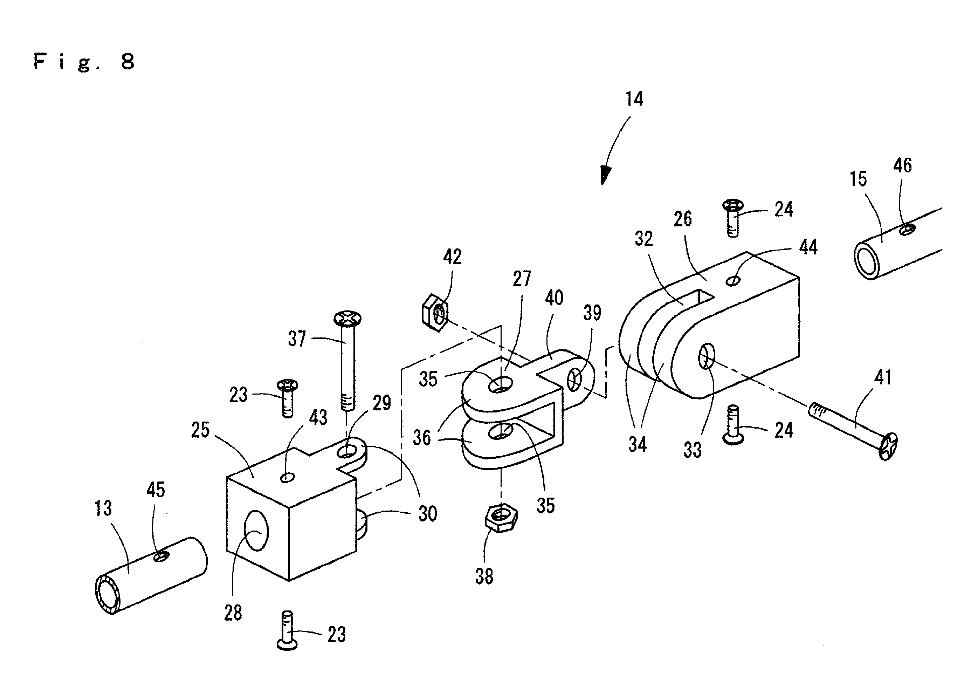

Accordingly, the intermediate joint 27 is connected with the engaging pieces 30 of the joint block 25 and is rotatable on a flat surface perpendicular to the axial direction of the pin 37, i.e., on a horizontal surface in Fig. 8. The intermediate joint 27 is further connected with engaging pieces 34, 34 of the joint block 26 and is rotatable on a flat surface perpendicular to the axial direction of the pin 41 i.e., on a vertical surface in Fig. 8.

In drawings, reference numeral 43 denotes screw holes formed on the top and bottom surfaces of the joint block 25. Reference numeral 44 denotes screw holes formed on the top and bottom surfaces of the joint block 26. Screws 23, 24 are insertable into the holes, respectively. Reference numerals 45, 46 denote screw holes formed on the end portions of the terminal rotatable shaft 13 and the rotatable shaft 15, and the screws 23, 24 are insertable therein, respectively.

In this case, each component of the shaft coupling 14 is formed by metal or plastic. However, an appropriate anti-corrosion treatment, such as plating, is required for metal. Thus, instead of metal, a rigid plastic can be used for each component, which allows the component to be lighter. This allows easy and inexpensive manufacturing.

As shown in Fig. 5, the shaft coupling 14 and an intermediate shaft 47 are disposed between the water turbine units 4, 4 disposed on the lower stream of the generator unit 3, and they are coaxial with the rotatable shafts 15, 15 which support the propellers 17.

The intermediate shaft 47 has the same diameter as the terminal rotatable shaft 13 and the rotatable shaft 15, and has a tubular shape somewhat shorter than those of the shafts. Instead of the terminal rotatable shaft 13, the intermediate shaft 47 is connected to one end of the shaft coupling 14. The other end of the intermediate shaft 47 and the rotatable shaft 15 on the upper stream is connected via a spring 48, and they are extendable, contractible, and oscillatable. This allows variations in size and shape or errors in assembly. Further, this structure absorbs the bending and torsional stress of the rotatable shaft 15, the intermediate shaft 47, and the shaft coupling 14.

In the embodiments, an extension coil spring is used for the spring 48. A compression coil spring or a leaf spring may be used for the spring 48 and they are formed by using a stainless steel wire or plate.

Accordingly, an appropriate anti-corrosion treatment is required for metal when using other metal. Instead of metal, a rigid plastic may be used for a lighter structure, and easy and inexpensive manufacturing.

The pin holes 49, 50 are formed on the peripheries of the opposed ends of the rotatable shaft 15 and the intermediate shaft 47. Pins 51, 52 are press-fitted into pin holes 49, 50. The pins 51, 52 are engaged with hooks 48a, 48a of the spring 48. In this case, it is preferable to respond to displacement of each shaft portion by interposing the spring 48 and the intermediate shaft 47 in the shaft portion between the generator unit 3 and the water turbine unit 4.

Additionally, in drawings, reference numeral 53 denotes a clutch, for example, a waterproof dog clutch, provided at the predetermined position of the plural water turbine units 4. For example, a pair of clutch elements (not shown) is provided between the ends of the rotatable shafts 15 of the plural groups of the water turbine units 4. The clutch elements are engaged with the rotatable shaft 15, a rotational joint 14, or the intermediate shaft 47, which are on the driving side and the driven side. Power of each water turbine unit 4 is transmitted to the generator unit 3 to generate electricity.

When connection of the pair of clutch elements is disengaged by human power or an electromagnetic manner upon inspection of the power generation apparatus 2, or when one of the rotatable shaft 15, the rotational joint 14, or the intermediate shaft 47 becomes overloaded, power transmission to the rotatable shaft 15, the rotational joint 14, and the intermediate shaft 47 is interrupted, or partially interrupted in order to prevent trouble and spreading thereof. Further, inspection can be carried out.

The power generation apparatus of the present invention thus configured includes a generator unit 3 and the water turbine units 4. The generator unit 3 and each water turbine unit is manufactured and assembled individually.

Firstly, the generator unit 3 includes the casing 6 having substantially a bullet shape, and is formed from a rigid plastic. The generator 5 is provided within the casing 6. One end of the terminal rotatable shaft 13 which associated with the generator 5 extends outwardly from the back end of the casing 6.

The pair of support frames 7 is provided on the upper periphery of the casing 6, and the float 8 is provided on the top of the support frame 7 via an installation plate.

The float 8 is formed in a substantially box shape by plastic or foamed plastic. The float 8 has a larger rectangular flat surface than the casing 6 as shown in Fig. 3. The casing 6 having the generator 5 therein is floated by the buoyancy of the float 8.

Next, the water turbine unit 4 each includes a hollow tubular housing 16, and the bearings 20, 20 are attached to the center of the support frames 16, 16.

Further, the propellers 17 integral with the spindle 21 are assembled in the housing 16. The rotatable shaft 15 for supporting the propellers 17 is supported by the bearings 20, 20, and the shaft end is protruded outwardly from the housing 16.

The float 18 is formed in a substantially box shape by plastic or foamed plastic. The float 18 has a smaller rectangular flat surface than those of the float 8 and the housing 16, as shown in Fig. 3. The casing 16 having the propellers 17 therein is floated by the buoyancy of the float 18. The float 18 is attached to the top of the casing 16.

Meanwhile, the joint blocks 25, 26 and the intermediate joint 27, for constituting the shaft coupling 14, are resin-molded, and then assembled.

Specifically, the pair of engaging plates 36 of the intermediate joint 27 is inserted between the pair of engaging pieces 30, 30 of the joint block 25. Pins 37 are inserted into the pin holes 29, 35. The nuts 38 are threaded into each rod end of the pins 37. The engaging pieces 30 and the engaging plates 36 are rotatably connected about the pin 37.

Next, the pivot plate 40, which is the other end of the intermediate joint 27, is inserted into a slit 32 of the joint block 26. The pin 41 is inserted into the pin holes 39, 33 of the pivot plate 40 and the engaging pieces 34. The nut 42 is threaded onto the rod end of the pin 41. The pivot plate 40 and the engaging pieces 34 are rotatably connected about the pin 41. This state is shown in Fig.8.

In the shaft coupling 14 thus assembled, the joint block 25 is connected to the intermediate joint 27 and is horizontally rotatable about the pin 37. The joint block 26 is connected to the intermediate joint 27 and is vertically rotatable about the pin 41.

Thereafter, the water turbine unit 4 is connected to the generator unit 3 by using the shaft coupling 14. Specifically, the terminal rotatable shaft 13 protruded from the generator unit 3 is inserted into the concave hole 28 provided on the joint block 25 of the shaft coupling 14. The screws 23 are inserted into the screw holes 43, 43 formed on the top and bottom of the joint block 25. The threaded ends of the screws 23 are threaded into the screw hole 45 of the terminal rotatable shaft 13, and thereby connecting the terminal rotatable shaft 13 to one end of the shaft coupling 14.

Meanwhile, the rotatable shaft 15 protruded toward the upper stream from the water turbine units 4 is inserted into the concave hole 31 provide on the joint block 26 of the shaft coupling 14. The screws 24 are inserted into the screw holes 44 formed on the joint block 26. Each threaded rod of the screws 24 is threaded into the screw hole 46 of the rotatable shaft 15 and the rotatable shaft 15 is connected to the other end of the shaft coupling 14. This state is shown in Figs. 7 through 9. The water turbine unit 4 on the uppermost stream is connected to the generator unit 3.

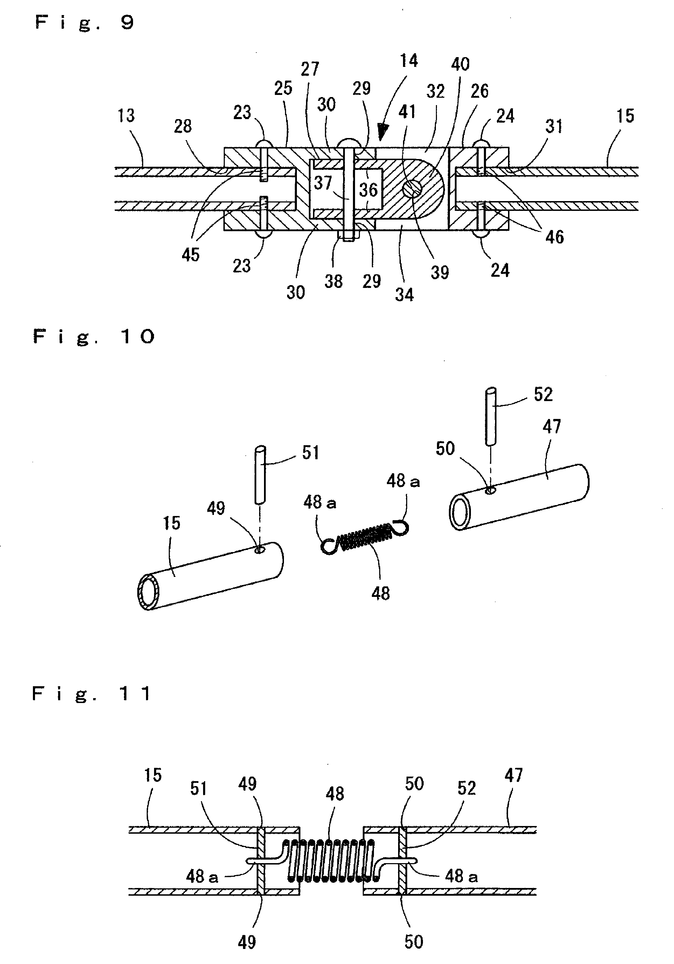

Then, next water turbine unit 4 is connected to the water turbine unit 4 on the uppermost stream. In this case, the pin 52 is press-inserted into the pin hole 50 formed at the end of the intermediate shaft 47. In the rotatable shaft 15 of the water turbine unit 4 on the uppermost stream, the pin 51 is press-inserted into the pin hole 49 formed at the protruding end on the lower stream. The rotatable shaft 15 and the intermediate shaft 47 are disposed in a face-to-face relationship. Then, the hooks 48a, which are both ends of the spring 48, are engaged with the pins 51, 52 so that the rotatable shaft 15 and the intermediate shaft 47 are connected to each other. They are oscillatable and move close to or away from each other. This state is shown in Figs. 10 and 11.

Thereafter, the other end of the intermediate shaft 47 is connected to the shaft coupling 14.

In the shaft coupling 14 provided on the lower stream of the respective water turbine units 4, the other end of the intermediate shaft 47 is inserted in the concave hole 28 of the joint block 25. The intermediate shaft 47 and the shaft coupling 14 are connected by screwing. One end of the rotatable shaft 15 of the third water turbine unit 4 is connected by screwing to the other end of the shaft coupling 14. This state is shown in Fig.5

Then, the third water turbine unit 4 is connected on the lower stream after connecting the two water turbine units 4 on the upper stream. One end of the intermediate shaft 47 is connected to the end of the rotatable shaft 15 protruded toward the lower stream of the second water turbine units 4 via the spring 48 in a manner similar to the connection of the second water turbine unit.

Next, the other end of the intermediate shaft 47 is inserted into the concave hole 28 of the joint block 25 and is attached by screwing. The other end of the intermediate shaft 47 is connected to the other end of the shaft coupling 14. Then, one end of the rotatable shaft 15 of the fourth water turbine unit 4 is fixed to the other end of the shaft coupling 14 by screwing. Thereafter, the water turbine units 4 are jointed to the lower stream via the spring 48 and the intermediate shaft 47, in the same manner as described.

Then, the clutch 53, such as a dog clutch, is installed at the predetermined position of the plural water turbine units 4, that are added. In the embodiments, the clutch 53 is installed at every five water turbine units 4. Specifically, a pair of clutch elements (not shown) is provided between the end of the rotatable shaft 15 and the shaft coupling 14 of the water turbine units 4. The clutch elements may be intermittently connected between the rotatable shaft 15 and the intermediate shaft 47.

In this manner, power of the water turbine units 4 is transmitted to the generator unit 3 for power generation. Connection of the pair of clutch elements is disengaged by human power or an electromagnetic manner upon inspection of the power generation apparatus 2, or when one of the rotatable shaft 15, the rotational joint 14, or the intermediate shaft 47 becomes overloaded. Power transmission to the rotatable shaft 15, the rotational joint 14, and the intermediate shaft 47 is interrupted, or partially interrupted in order to prevent overload and trouble, and spreading thereof. Further, inspection can be carried out.

The shaft coupling 14, which is a universal joint, is provided between the generator unit 3 and the water turbine units 4, 4, and between the water turbine units 4, 4, that are adjacent to each other. The shaft portions on both sides are connected and oscillatable so that it responds to horizontal or vertical displacement of the rotatable shaft 15 and the intermediate shaft 47 and transmits the torque smoothly and reliably. Further, stress and strain of the rotatable shaft 15 and the intermediate shaft 47 are reduced, and the load applied on the shafts is reduced.

Further, the rotatable shaft 15 and the intermediate shaft 47 are connected via the spring 48. This absorbs and allows variations in the distance between the pins 51, 52 due to errors in size, which occurs during processing or assembly of each component. High degree of precision is not required for processing and assembly of the components, and thus, they can be manufactured and assembled easily and at low costs.

Additionally, the expansion/contraction displacement and the torsional displacement of the spring 48 absorb the oscillation displacement and torsional displacement of the rotatable shaft 15 and the intermediate shaft 47. Further, the oscillation displacement and torsional displacement are reduced and transmitted so that each component works smoothly and in a stable manner.

Further, the generator unit 3 of the present invention is connected with a predetermined number of the water turbine units 4. The rotatable shaft 15, the intermediate shaft 47, the spring 48, and the shaft coupling 14 are provided between the water turbine units 4, 4. The water turbine units 4, 4 do not require a conventional current collector wire therebetween. This reduces the burden for wiring, and therefore, the water turbine units 4, 4 can be installed easily and at low costs. One end of the cable 10 is attached to the projection 9 of the generator unit 3. The current collector wire connected to the generator 5 is provided in a watertight condition along the cable 10. The sending end is connected to a battery charger or a transmission device on the shore, as required.

As described above, the generator unit 3 is connected with the water turbine units 4. A protective cover 22 is attached to the upper stream of each water turbine unit 4. Then, they are disposed in the appropriate place within the river 1.

In this case, the one end of the cable 10 is attached to the projection 9 of the generator unit 3, and the other end is attached to the anchoring member 12 provided on the bottom of the river. The connected generator unit 3 and the water turbine units 4 are floated on the streaming water surface 1a.

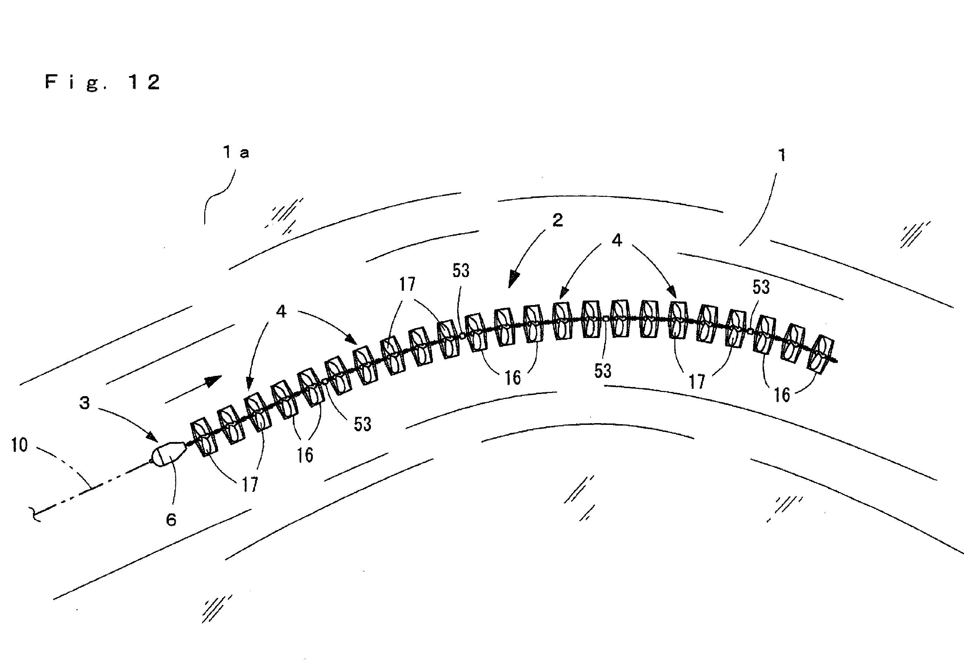

In the manner as described, each float 8, 18 of the generator unit 3 and the water turbine units 4 is floated on the water surface 1a and drifted. The generator unit 3 is positioned on the uppermost stream, and each of the water turbine units 4 forms a line in the connected order. This state is shown in Figs. 1 and 12.

Then, the housing 16 of each water turbine unit 4 is positioned below the water surface 1a. The stream which moves in the housing 16 allows the propellers 17 to rotate. Then the shaft 15 of the water turbine units 4 is rotated at a time and transfers the rotational force to the rotational joint 14, the intermediate shaft 47, the spring 48, and the clutch 53 on the upper stream.

The clutch 53 is normally connected with the clutch elements (not shown). The rotational force on the driving side is transferred to the driven side. The rotational force of respective water turbine units 4 is transmitted to the generator 5 of the generator unit 3. The electric energy is generated by rotation of the generator 5.

As previously stated, in the present invention, rotation of the propellers 17 of the water turbine units 4 is transferred to the generator 5 of the generator unit 3 to generate power. Compared with the conventional ones, in which generator units are rotated by stream for generating electricity, the present invention provides a high-speed and stable rotation, and enabling to generate a high and stable electric energy. The generator mechanism and the rotational mechanism are separated in the present invention, thereby making each mechanism simpler. Further, stability of the generator unit 3 and the water turbine units 4 is achieved during generating power.

Meantime, each water turbine unit 4 moves along the stream, and the rotational joint 14 and the spring 48 absorb and allow the movement and displacement. This stabilizes the rotation of the propellers 17 and power generation by the generator 5.

Further, plural the water turbine units 4 are provided on the lower stream of the generator unit 3. The propellers 17 of respective water turbine units 4 work as a flywheel. This compensates for random rotation of the propellers 17 of the respective water turbine units 4 and provides a stable rotation and power generation.

The protective cover 22 is attached to the side on the upper stream of the respective water turbine units 4, and prevents the entry of debris and foreign objects within the water, and further prevents trouble of the propellers 17.

Further, the clutch 53 is provided at the appropriate positions of respective water turbine units 4. Power is interrupted in the front of or back of the clutch 53, and thus the clutch 53 can be stopped when needed for inspection. This prevents an overload and trouble of the water turbine units 4 and spreading thereof.

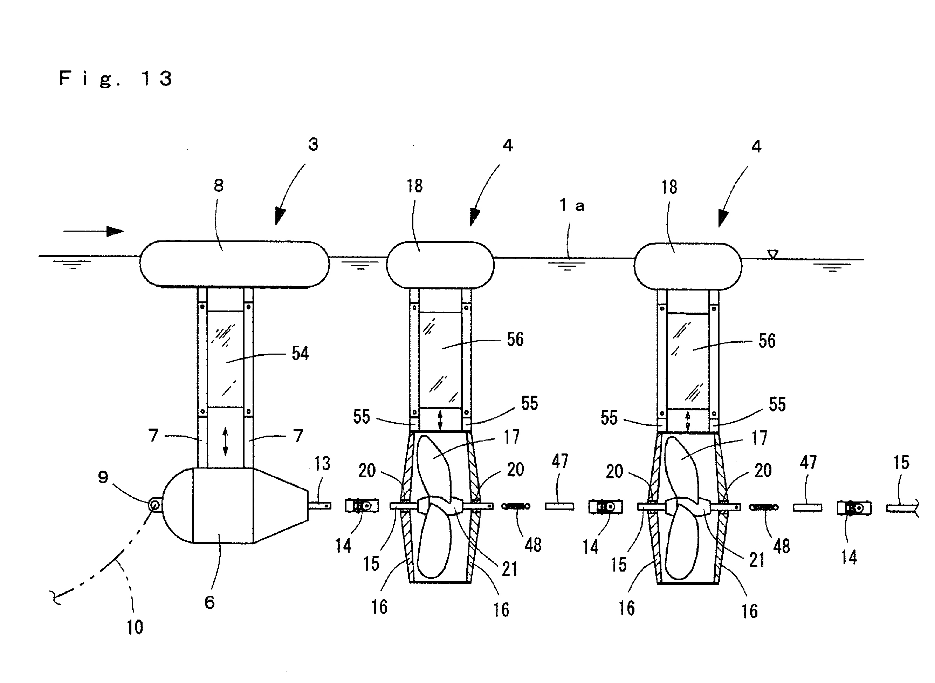

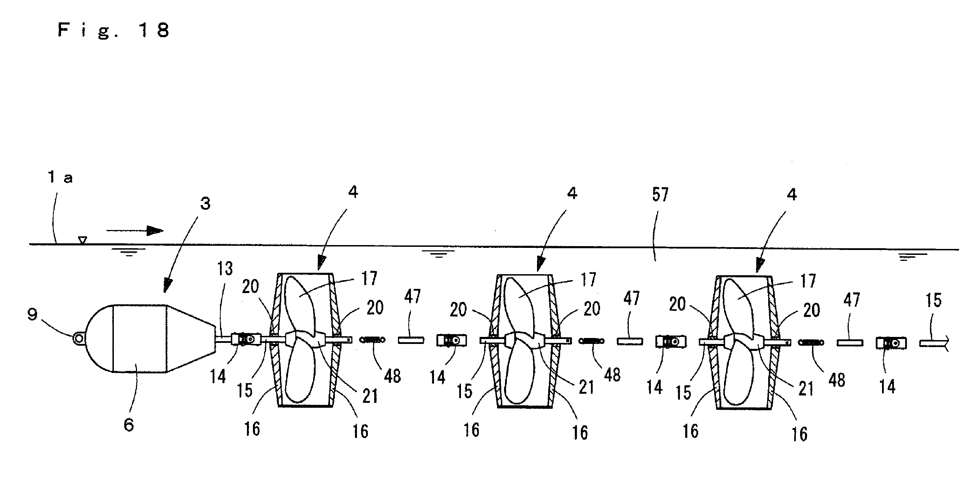

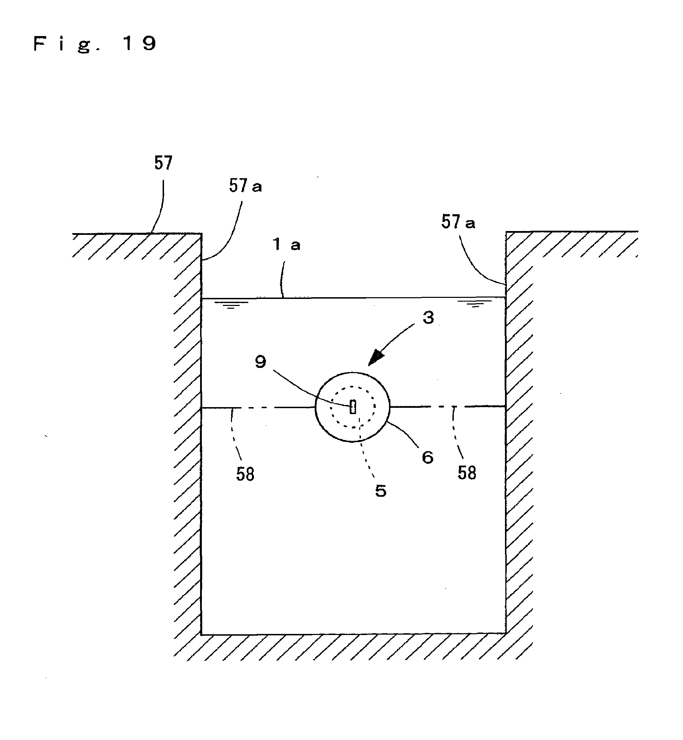

Fig. 13 through Fig. 28 show the other embodiments of the present invention. The same reference numerals are given to identical parts as the above-described structure. Fig. 13 shows the second embodiment of the present invention. In this embodiment, the support frames 7, 7 are provided extended to the top periphery of the casing 6 of the generator unit 3. A weight plate 54 having a predetermined weight is provided and movable up and down so that the center of gravity of the generator unit 3 is adjustable. A pair of support frames 55, 55 is provided upright on the upper periphery of the housing 16 of the water turbine units 4.

A weight plate 56 having a predetermined weight provided to the support frames 55, 55 and is movable up and down. The center of gravity of the water turbine units 4 can be adjusted.

Specifically, upward movement of the weight plate 54 raises the center of gravity of the generator unit 3, and further raises the height of the generator unit 3 in the water. Downward movement of the weight plate 54 lowers the center of gravity of the generator unit 3, and further lowers the height of the generator unit 3 in the water.

Additionally, upward movement of the weight plate 56 raises the center of gravity, and further raises the height of the water turbine units 4 in the water. Downward movement of the weight plate 56 lowers the center of gravity, and further lowers the height of the water turbine units 4 in the water.

In a relatively shallow area, the weight plates 54, 56 are moved upwardly so that the generator unit 3 and the water turbine units 4 are floated. In this manner, the casing 6 and the housing 16 are prevented from being contacted with the bottom of rivers, and prevented from being stagnated. Further, this structure provides a stable power generation depending on the depth of water.

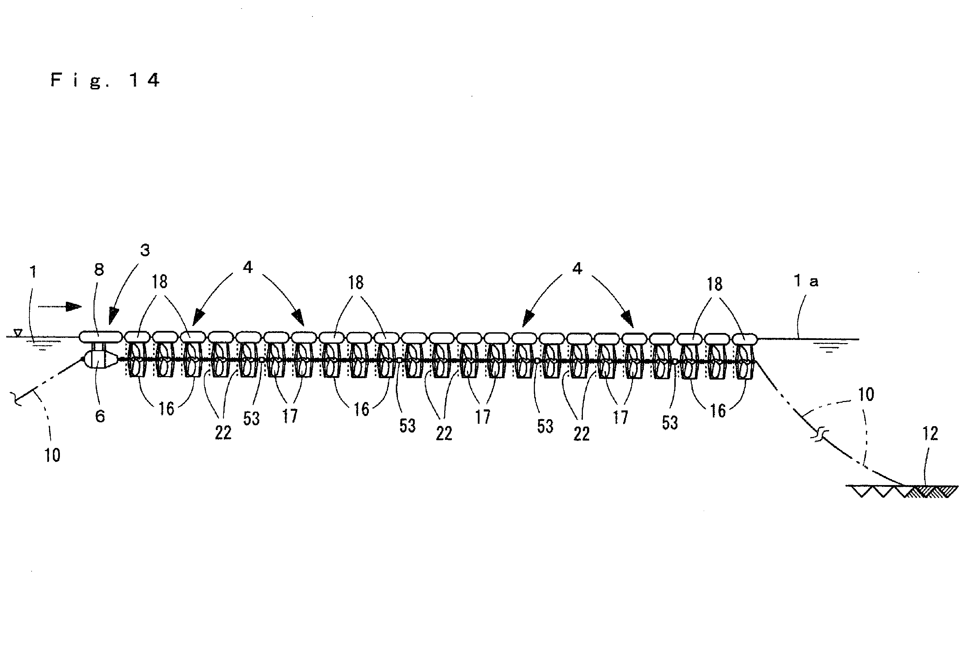

Fig. 14 shows the third embodiment of the present invention. In this embodiment, one end of the cable 10 is attached to the end of the water turbine unit 4 on the lower stream, as well as the upper stream end. The other end is anchored to the anchoring member 12 on the bottom of the river, which restricts the movement of the power generation apparatus in the river-width direction via the stream. The power generation apparatus is floated in the predetermined area in the stream, and it provides a stable and safer power generation.

In addition to the upper and lower stream ends of the power generation apparatus, one or plural cables 10 may be anchored to the bottom of the river to keep the position of the power generation apparatus for more stable and safe power generation.
Further, instead of anchoring the power generation apparatus by using the flexible anchoring member 10, for example, rigid support frames may be provided upright on the river bottom on the upper and lower stream ends of the power generation apparatus for more stable and safer power generation.

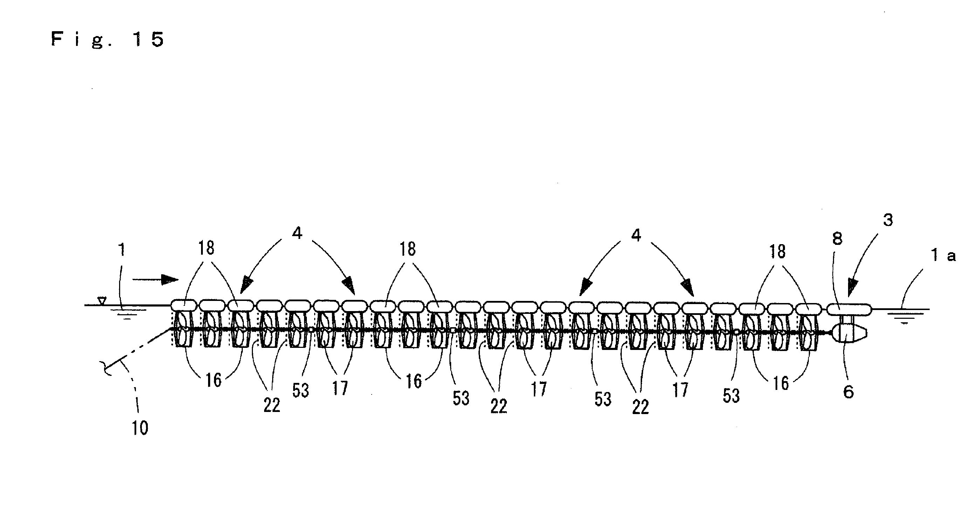

Fig. 15 shows the fourth embodiment of the present invention. In this embodiment, the generator unit 3 is disposed at the end of the power generation apparatus. The stream directly acts on the water turbine units 4 on the front, increases the rotational speed of the propellers 17, and thus provides a high power output.

In this case, the generator unit 3 may be disposed at the middle portion besides the end of the power generation apparatus. Further, plural generator units 3 may be positioned at the appropriate positions of the power generation apparatus. This prevents trouble of the water turbine units 4 and the generator unit 3, reduction of the power output of the water turbine units 4, and further prevents suspension of operation of electric power.

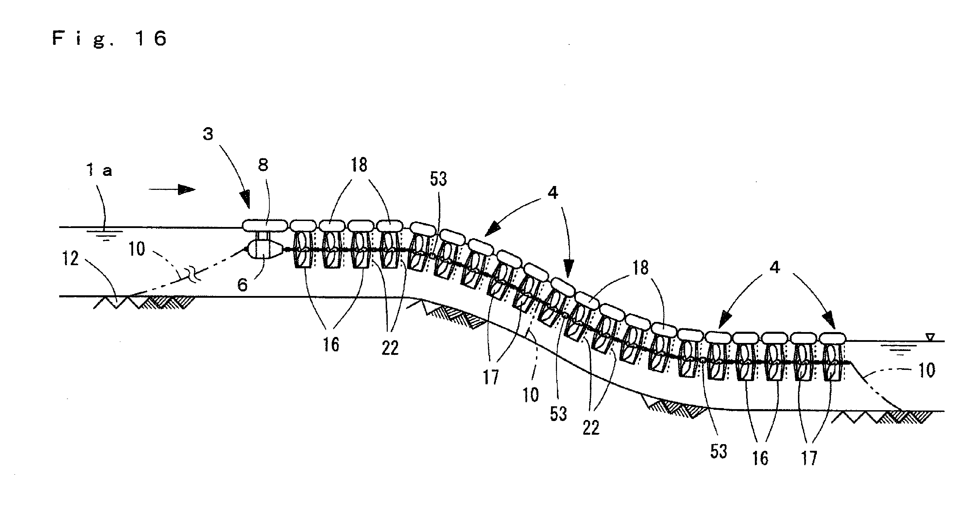

Fig. 16 shows the fifth embodiment of the present invention. In this embodiment, instead of installing the power generation apparatus on the gentle stream, the power generation apparatus is installed in a rapid stream, rapids, or waterfalls, that having a predetermined height difference between the upstream and downstream.

In this case, the generator unit 3 or the water turbine units 4 is disposed on the front end of the power generation apparatus. The generator unit 3 or the water turbine units 4 is disposed on the back end of the power generation apparatus. One ends of the cables 10 are attached to the upper stream end, the lower stream end, and the middle portion. The other ends are anchored to the bottom of the river. This prevents the generator unit 3 and the water turbine units 4 from oscillating by the stream, and promotes a stable power generation.

In this case, an appropriate anchor may be attached to the generator unit 3 and the water turbine units 4. The floats 8, 18 may be replaced with smaller ones. It is preferable to stabilize the position of the generator unit 3 and the water turbine units 4.

As described above, in this embodiment, increased rotational speed of the water turbine units 4 is obtained compared with the case in a gentle stream. Accordingly, this embodiment generates a high generation output.

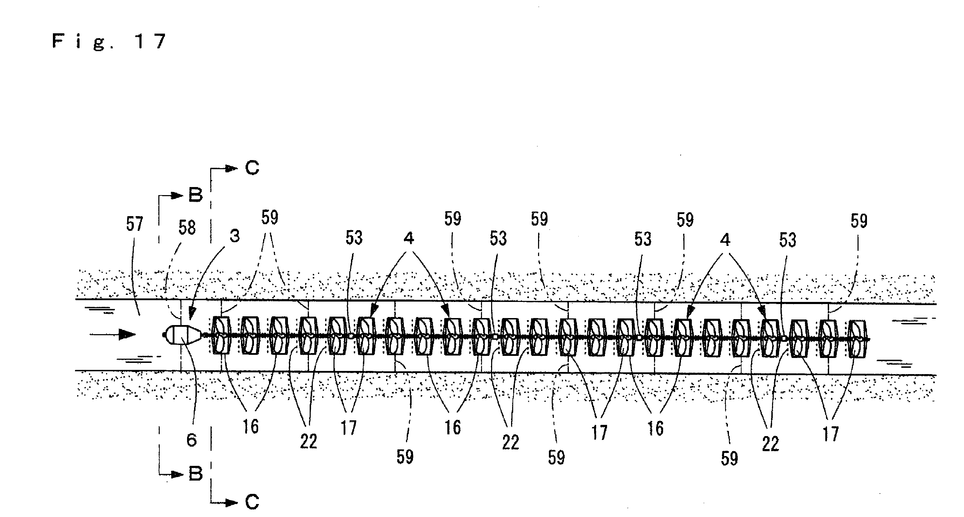

Fig. 17 through Fig. 20 show the sixth embodiment of the present invention. In this embodiment, the present invention is installed in an agricultural or industrial channel 57 with a predetermined available stream, instead of installing in the river 1.

One or plural generator unit 3 and the water turbine units 4 are connected via the rotatable shafts 13, 15, the shaft coupling 14, the intermediate shaft 47, the spring 48, and the clutch 53. They are oscillatable and move close to or away from each other, as already described.

Then, the floats 8, 18 of the generator unit 3 and the water turbine units 4 are removed. One ends of the cables 58, 59 are connected to the generator unit 3 and the water turbine units 4. The other ends are attached to the predetermined positions on the side wall 57a of the channel 57. Thus, the generator unit 3 and the water turbine units 4 are installed at the predetermined depth of the channel 57.

This enhances a stabilized movement of the generator unit 3 and the water turbine units 4 in the stream, and further provides a stabilized stream to the water turbine units 4. Accordingly, power can be generated in a reliable and stable manner.

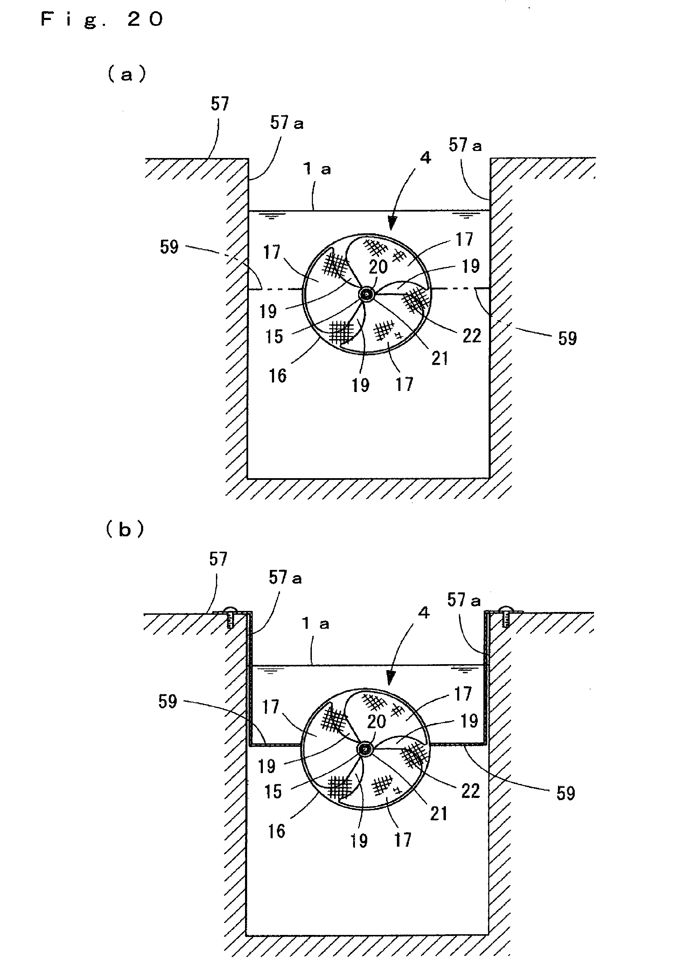

In this case, as shown in Fig. 20(b), the cables 58, 59 or steel plates are formed in a substantially Z-shape. The one end may be connected to the generator unit 3 and the water turbine units 4 and the other end may be secured to the edge of the channel 57. Thus, the generator unit 3 and the water turbine units 4 can be installed in the channel 57 easily.

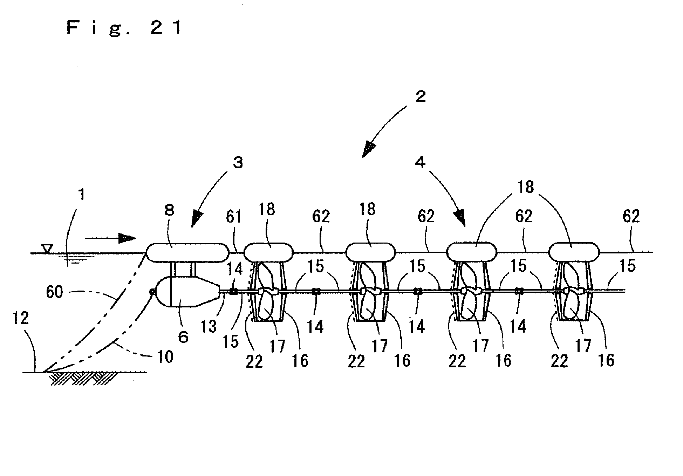

Fig. 21 shows the seventh embodiment of the present invention. In this embodiment, the front part of the float 8 of the generator unit 3 is connected to a cable 60, and the other end of the cable 60 is connected to the anchoring member 12. At the same time, the float 8 and the adjacent float 18 of the water turbine units 4 are connected via the cable 61. Further, the floats 18, 18 of the adjacent water turbine units 4, are connected to each other via the cable 62 such as a wire. Accordingly, in the power generation apparatus 2, the cable 10 and the rotatable shafts 13, 15 pull the casing 6 and the housing 16 of the respective water turbine units 4 in a stable manner. Further, the cable 60 and the cables 61, 62 pull the floats 8, 18 in a stable manner, thereby increasing the stability in use.

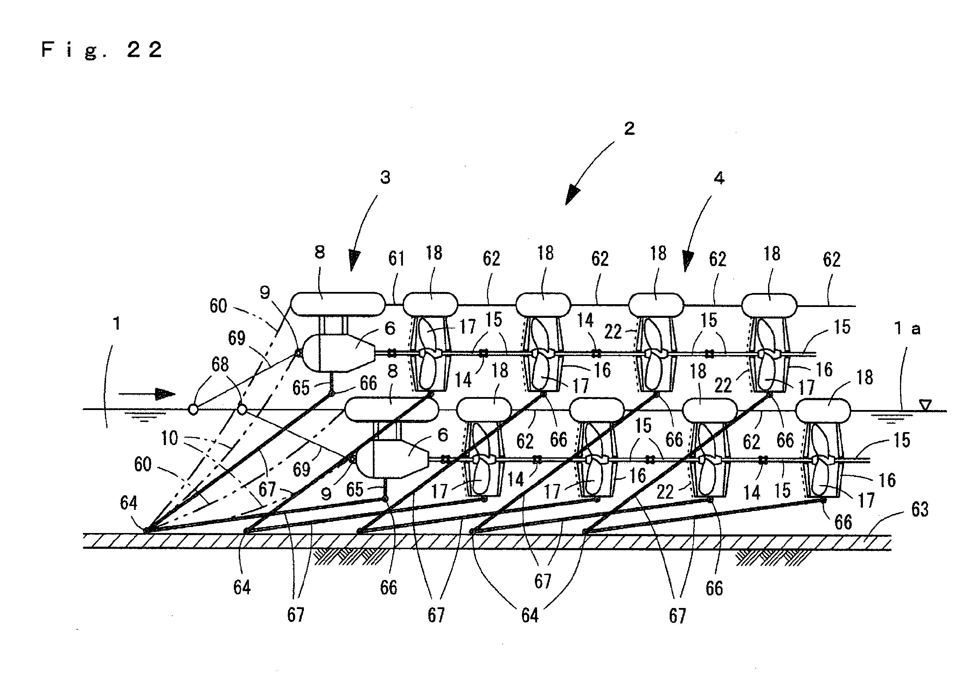

Fig. 22 shows the eighth embodiment of the present invention. In this embodiment, a flat portion having a predetermined width is provided on the bottom of the installation area of the power generation apparatus 2 along the upstream/downstream direction. In this embodiment, concrete 63, which is a planar base plate, is provided as the flat portion, on the bottom of the river. Plural fixed portions 64 are provided on the concrete 63 at equal intervals along the upstream/downstream direction.

The fixed portion 66 is provided at the bottom of each housing 16, and further at the lower end of the stay 65 protruded from the casing 6. The lower end of the stay 65 is at the same height as the bottom of the housing 16. The distance between the adjacent fixed portions 66, 66 is the same as the distance between the fixed portions 64, 64.

One ends of swivel links 67 are rotatably connected to the respective fixed portions 64, and the other ends are rotatably connected to the respective fixed portions 66. A four-bar linkage mechanism or a parallel linkage mechanism is constructed from the pair of corresponding swivel links 67, 67, fixed links between the fixed portions 64, 64, that are oppositely facing up and down, and a movable link between the fixed portions 66, 66.

In drawings, reference numeral 68 denotes a float which floats on the water surface 1a and can be held by a hand. One end of an operational rod 69, which is light and rigid, is connected to the float 68, and the other end is connected to the projection 9 of the casing 6 of the projection 9. The float 68 is normally floated on the water surface 1a on the upper stream of the float 8 so that the float 68 is visible. For maintenance, the float 68 is held and the operational rod 69 is pulled to raise the link mechanisms.

In this embodiment, the link mechanism is folded during power generation by the power generation apparatus 2. Each swivel link 67 is submerged into the water. Each of the floats 8, 18 of the generator unit 3 and the water turbine units 4 are floated on water surface 1a. The propellers 17 in each of the housings 16 are rotated, moving the rotatable shaft 15, and thereby activating the power generation apparatus in the casing 6. Then, the float 68 is floated on the water surface 1a on the upper stream so that the float 68 is visible.

The generator unit 3 and respective the water turbine units 4 are raised by pulling force of the operational rod 69, which is operated by human power. They may be pulled manually or by using an electric winch (not shown).

For example, when debris is attached to the protective cover 22, or when the generator unit 3 and the water turbine units 4 are repaired or checked, the float 68 is pulled in the upward direction, and moves the operational rod 69 simultaneously. The pulling force acts on the swivel link 67 on the upper stream.

The swivel link 67 is then raised with the fixed portion 64 as a support point. The top end of the swivel link 67 is raised to the water surface 1a. This allows the casing 6 and the housing 16 to move simultaneously. The generator unit 3 and the water turbine units 4 are then raised to the water surface 1a and kept the position for removing the debris attached to the protective cover 22. At that time, repair and maintenance for the generator unit 3 and the water turbine units 4 can be carried out.

After the maintenance, the float 68 is released and each swivel link 67 is tilted with the fixed portion 64 as a support point. The top end is then submerged into the water, allowing respective floats 8, 18 of the generator unit 3 and the water turbine units 4 to be floated on the water surface 1a for restarting power generation.

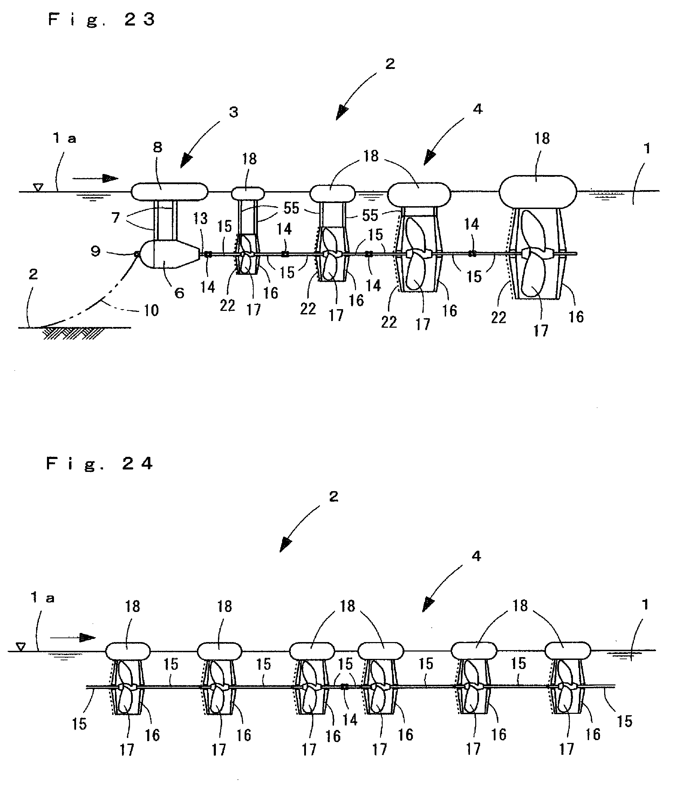

Fig. 23 shows the ninth embodiment of the present invention. In this embodiment, the water turbine units 4 associated with the generator unit 3 and on the lower stream gradually become larger compared with the water turbine units 4 on the upper stream. The increased weights and resistance restrict the movements of the water turbine units 4 in the width direction, and further promote straightness and stability. Accordingly, stability of the power generation apparatus 2 can be obtained.

In this embodiment, in the adjacent pair of the water turbine units 4, the size of each component of the water turbine unit 4 on the lower stream is about 1.2 to 1.4 times compared with that of the water turbine unit 4 on the upper stream. The volume and weight of the water turbine unit 4 on the lower stream are increased by more than the ratio above.

Fig. 24 shows the tenth embodiment of the present invention. In this embodiment, short rotatable shafts 13, 15 are provided between the generator unit 3 and the water turbine units 4, and the every adjacent pair of water turbine units 4, 4. Instead of connecting them via the shaft coupling 14, plural water turbine units 4 are divided into groups of two to four. The water turbine units 4 in each group are provided with the single rotatable shaft 15. The rotatable shafts 15, 15 of the adjacent groups are connected to each other via the shaft coupling 14. This prevents bending of the plural rotatable shafts 13, 15 and the shaft coupling 14, and improves stability of the water turbine units 4 in respective groups. Accordingly, the power generation apparatus 2 works in a stable manner.

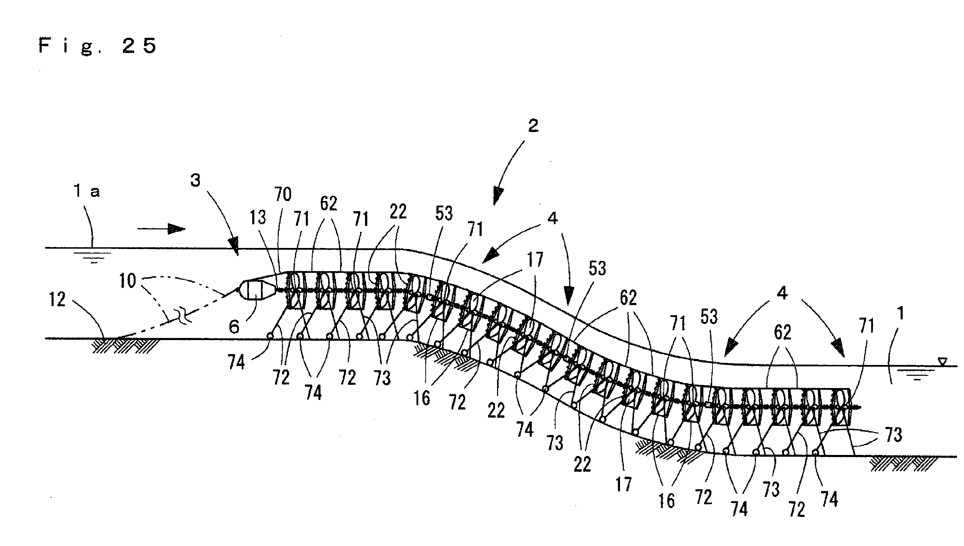

Fig. 25 through Fig. 28 show the eleventh embodiment of the present invention. In this embodiment, the floats 8, 18 of the generator unit 3, the water turbine units 4 are removed. The top ends of the housing 16 of the respective water turbine units 4 are connected to each another via the cable 62. The housing 16 at the front and the casing 6 are connected via a cable 70, such as a wire. Meanwhile, rotary shafts 71, 71 are protruded on both sides at the same heights of the housing 16 of the respective water turbine units 4. The rotary shaft 71 includes two shaft portions, inside and outside. The shaft portions are rotatable independently and provided axially. The shaft portions are connected with the top ends of the pair of support legs 72, 73, respectively.

The top portions of the support legs 72 are connected to the shaft portions outside. The lower end portions are attached with an anchor 74. The anchor 74 is installed on the river bottom. The top portions of support legs 73 are connected to the shaft portions inside. The lower end portions of the support leg 73 are provided upright on the river bottom. Stopper 75 is laid across at the predetermined position of the support legs 72, 73. The both ends of the stopper 75 are engaged with plural holes or projections (both not shown) provided on the support legs 72, 73, and thereby maintaining the open position and the angle of the support leg 72, 73. Further, stoppers 76, 77 are laid across at the predetermined positions of the right-and-left pair of the support legs 72, 73. The both ends of the stoppers 76, 77 are engaged with plural holes or projections (both not shown), and thereby keeping each pair of the support legs 72, 73. Similar support legs may be used for not only the water turbine units 4 but also the generator unit to provide a stabilized installation of the generator unit 3.

As previously stated, in this embodiment, omitting the floats 8, 18 of the generator unit 3 and the water turbine units 4 reduces the number of the components, and allow the power generation apparatus 2 to be manufactured at low costs.

Before installation of the power generation apparatus 2, the respective stoppers 75 to 77 of the water turbine units 4 are removed, and the support legs 72, 73 are folded with the rotary shaft 71 as a center to make the power generation apparatus 2 compact. Accordingly, it can be handled and stored easily.

Next, for installing the power generation apparatus 2 in the river, the support legs 72, 73 are unfolded with the rotary shaft 71 as a center. Then, the stopper 75 is laid across between the unfolded support legs 72, 73. The housing 16 is adjusted in height by keeping the angle. The stoppers 76, 77 are laid across between the right-and-left support legs 72, 73 for supporting the support legs 72, 73 rigidly.

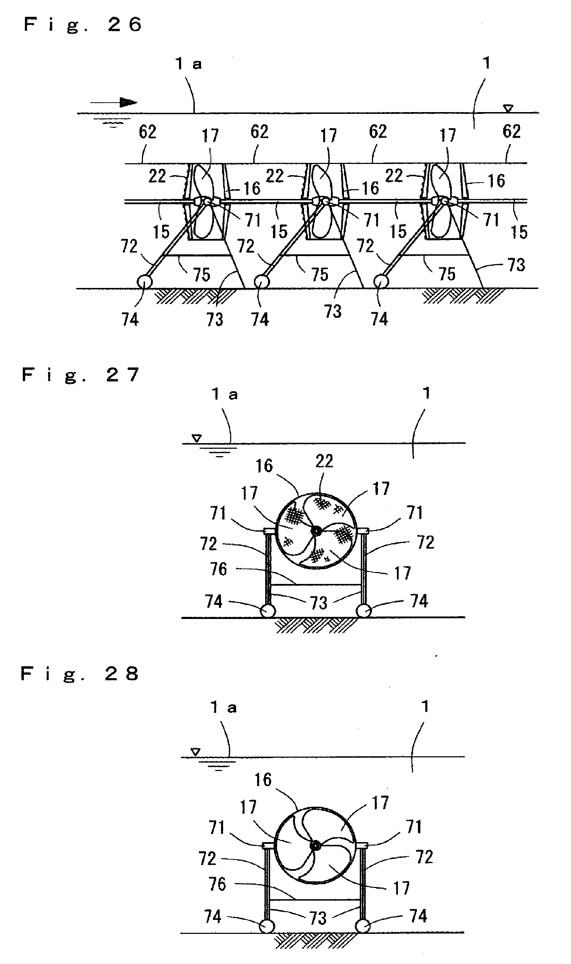

Thereafter, the support leg 72 is provided on the upper stream, the anchor 74 on the lower end of the support leg 72 is provided at the predetermined position on the river bottom. The support leg 73 is provided on the lower stream, and the lower end of the support leg 73 is installed at the predetermined position on the river bottom to stand one water turbine unit 4 upright on the river bottom. In this case, the support leg 73 may be provided on the upper stream, the support leg 72 may be provided on the lower stream. Other water turbine units 4 are provided upright in the same manner as described. This state is shown in Fig. 26 through Fig. 28.

The generator unit 3 and the water turbine units 4 are installed in the water in a manner as described. The top end of the casing 6 is connected to one end of the cable 10, the other end is connected to the anchoring member 12 which is on the river bottom, and thereby submerging the power generation apparatus 2 into the water.

This state is shown in Fig. 25. The generator unit 3 and the water turbine units 4 are submerged into the water. The propellers 17 of the respective water turbine units 4 are rotated by the stream, causing the rotatable shafts 13, 15 to rotate. The driving force is transmitted to the power generation apparatus within the casing 6 to generate electricity by rotation of the power generation apparatus.

Meantime, the top portions of the generator unit 3 and the water turbine units 4 are supported by the cables 62, 70 to restrict oscillation. The lower ends are securely supported by the anchors 74. Since the middle portions are supported by the rotatable shafts 13, 15, the power generation apparatus 2 provides a stable power generation and power output compared with the structure in which the generator unit 3 and the water turbine units 4 oscillate in the water.

In the above-described embodiments, the present invention is installed in the river 1 or the channel 57. It is appreciated that the present invention may be installed in the ocean and lakes with a predetermined available stream.

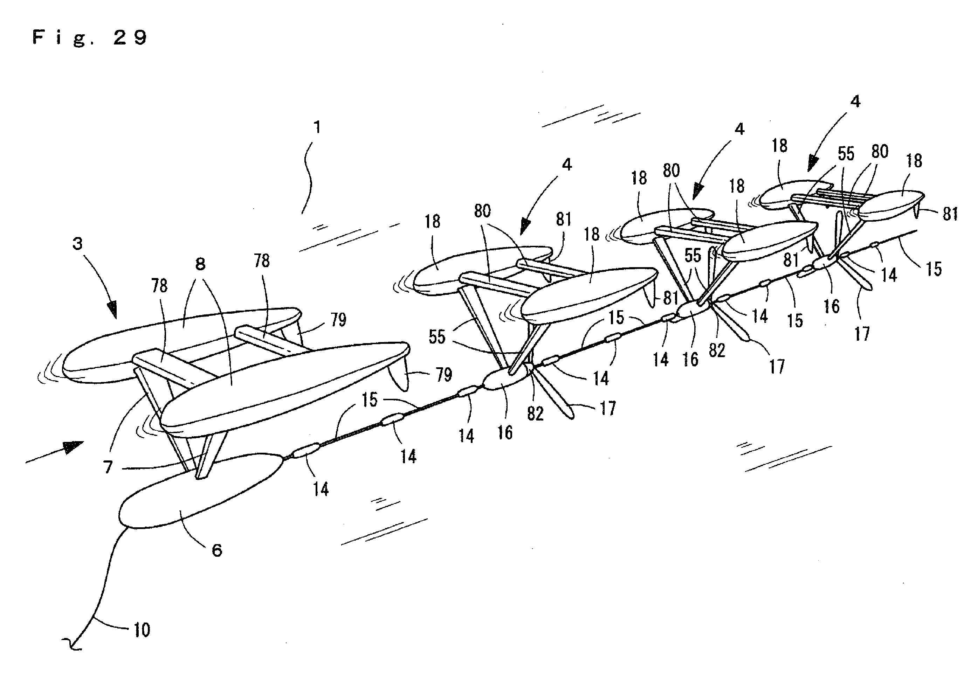

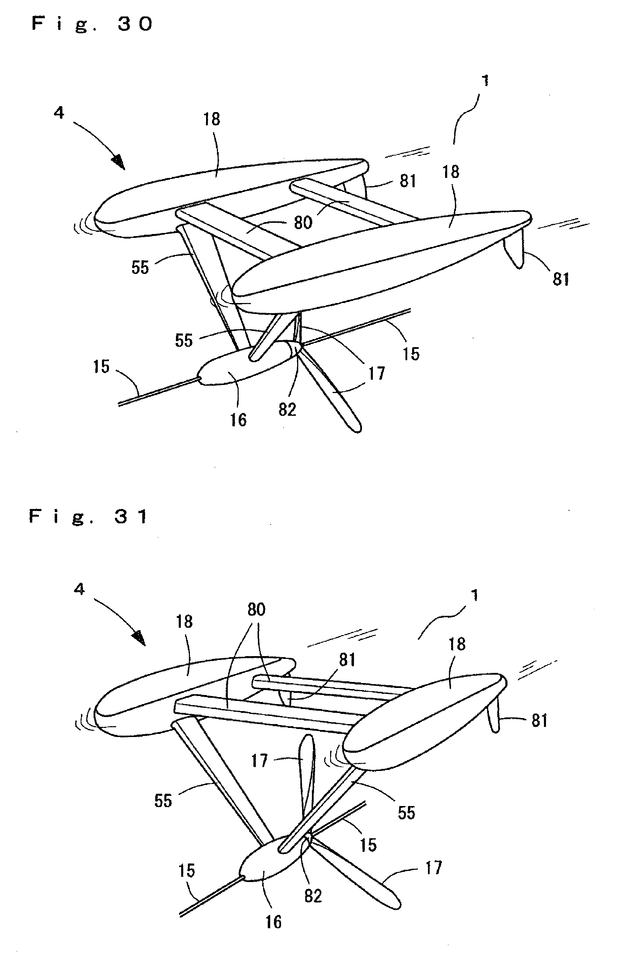

Figs. 29 through 30 show the twelfth embodiment of the present invention. In this embodiment, the present invention is applied to power generation that uses a tidal current or an ocean current. The casing 6 of the generator unit 3 is formed in a substantially bullet shape or a torpedo shape from foamed plastic. The surface of the casing 6 is covered with fiber reinforced plastic (FRP), fiber reinforced thermoplastic (FRTP), or glass fiber reinforced epoxy resin (GFRP) for a light and rigid structure.

A pair of support frames 7 is protruded to form a substantially V-shape from the middle position of the upper periphery of the casing 6. The front parts of the floats 8, 8 are attached to the top ends of the frames 7,7. The frames 7, the floats 8, 8, and connecting frames, which will be described later, are connected to each other and form an inverted-triangular truss structure. Since they are connected in a rigid and stable manner, they resist various displacement and stress caused by the ocean current. This state is shown in Fig. 29.

The floats 8, 8 are disposed oppositely, spaced from each other, and parallel to each other. The floats 8, 8 are formed in a substantially bullet or torpedo shape which is bigger and longer than the casing 6. The floats 8, 8 have a light, rigid, and airtight structure by using the same components as the casing 6.

The opposite peripheries of the floats 8, 8 are connected via a pair of connecting frames 78, one is smaller than the other, and each frame has an airfoil cross section. The connecting frame 78 which is wider is disposed on the front, and the other connecting frame 78 which is narrower is disposed on the back.

The back portions of the floats 8, 8 are provide on the lower position than the rear part of the casing 6, i.e., on the lower side. A fin 79 having an airfoil cross section is protruded downward from the lower surface of the back end of each of the floats 8, 8. Accordingly, the floats 8, 8 can smoothly move along the ocean current.

Meanwhile, the housing 16 of the water turbine unit 4 is smaller than the casing 6. The housing 16 is molded in a substantially bullet or torpedo shape, about half the diameter of the float 18, and less than half in length of the float 18. The housing 16 has a light, rigid, and airtight structure by using the same components as the casing 6.

A pair of support frames 55 is provided to form a substantially V-shape on the middle position of the upper periphery of the housing 16. The front parts of the floats 18, 18 are attached to the upper ends of the support frames 55, 55.

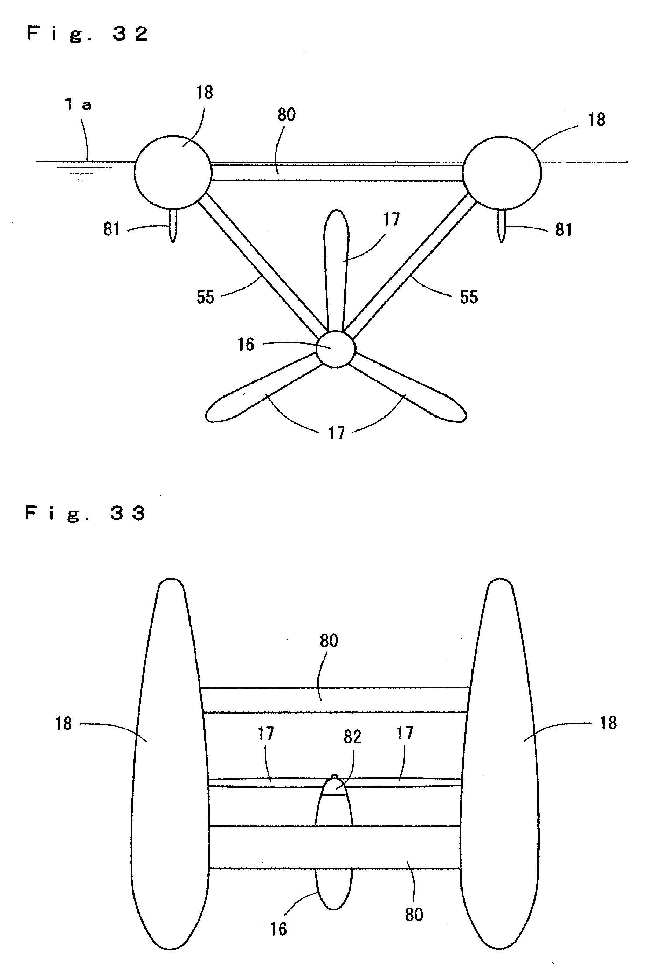

Accordingly, the frames 55, 55, the floats 18, 18, and connecting frames, which will be described later, are connected to each other and form an inverted-triangular truss. Since they are connected in a rigid and stable manner, they can resist various displacement and stress caused by the ocean current. This state is shown in Figs. 29 through 32.

The floats 18, 18 are disposed oppositely, spaced from each other, and parallel to each other. The floats 18, 18 are formed in a substantially bullet or torpedo shape which is somewhat smaller than the floats 8 and bigger and longer than the housing 16. The floats 18, 18 have a light, rigid, and airtight structure by using the same components as the casing 6.

The opposite peripheries of the floats 18, 18 are connected via a pair of connecting frames 80, one is smaller than the other, and each frame has an airfoil cross section. The connecting frame 80 which is wider is disposed on the front, and the other connecting frame 80 which is narrower is disposed on the back.

The back portions of the floats 18, 18 are provided on the lower position than the rear part of the housing 16, i.e., on the lower side. A fin 81 having an airfoil cross section is protruded downward from the lower surface of the back end of each of the floats 18, 18. Accordingly, the floats 18, 18 can smoothly move along the ocean current.

A rotor 82 is rotatably mounted to the back end of the housing 16, and the rotor 82 is associated with the rotatable shaft 15. The base part of the three propellers 17 is attached to the outer periphery of the rotor 82, and the position is substantially the center of the floats 18.

Instead of using the above-described screw propellers, the propellers 17 are formed in a blade shape. The propellers 17 are shaped in an airfoil cross section by stacking, for example, the above-described GFRP. The width of each propeller 17, i.e. the length of the blade, is more than one half the length of each support frame 55 and the connecting frame 80. The propeller 17 is about 4 times the outer diameter of the housing 16. Each of the propellers 17 has a wide water-receiving area so that the propellers can rotate fast by a large lift force and hydraulic energy.

A waterproof cover in a shape of a substantially bullet or torpedo shape is put on the outer surface of the joint blocks 25, 26 of the shaft coupling 14. Accordingly, the shaft portion inside can be protected from seawater, and flow resistance of seawater can be reduced.

As described above, the generator unit 3 and each of the water turbine units 4 are provided with a pair of support frames 7, 55, and the support frames 7, 55 form a substantially V-shape. A pair of floats 8 or the floats 18 is provided at the top end of the support frames 7, 55. Further, each pair of the connecting frames 78, 80 connects each pair of floats 8, 18. The support frames 7, 55 and the connecting frames 78, 80 form an inverted-triangular truss. Since they are connected in a rigid and stable manner, they can resist various displacement and stress caused by the ocean current. This state is shown in Figs. 29 through 32.

Additionally, the propellers 17 are formed in a blade shape and disposed outside the housing 16, thereby allowing the housing 16 to be lighter compared with the above-described embodiment, in which the housing 16 is disposed inside. Each of the propellers 17 is disposed between the floats 18, 18, thereby making the design of the blade width flexible.

The generator unit 3 and the water turbine units 4 are supported by the floats 8 or the floats 18, thereby providing stability on the sea surface or in the sea. Further, oscillating displacement of the rotatable shaft 15 between the casing 6 and the housing 16 can be prevented, and the rotational force of the propellers 17 can be transmitted in a stable manner.

Still further, fins 79, 81 are provided at the back ends of each of the floats 8, 18. Accordingly, the floats 8, 18 can smoothly move along the ocean current, and posture of the generator unit 3 and the water turbine units 4 can be stabilized.

The casing 6, the housing 16, the floats 8, 18, and the shaft coupling 14 are formed in a substantially torpedo shape to reduce flow resistance. Accordingly, the generator unit 3 and the water turbine units 4 move in a stable manner along the ocean current, a natural and stable stress state of each component can be obtained, and thereby preventing damage and providing long term use.

Additionally, the propellers 17 are formed in a blade airfoil shape, by using, for example, the above-described GFRP. The width of the blade is more than one half the length of the each of the support frames 55 and the connecting frames 80, and the width of the blade is about the four times the outer diameter of the housing 16. Each of the propellers 17 has a wide water-receiving area so that a great deal of hydraulic energy and power can be obtained.
Finally, in a twelfth embodiment and the other embodiments, the floats 8, 18 are provided with filling ports (not shown), respectively. The filling ports are openable and closable by using a cap (not shown). When a storm or typhoon approaches or when a water level rises due to heavy rain, a predetermined amount of water is filled into the floats, 8, 18 from the filling ports to increase weight of the floats 8, 18. It is preferable that the floats 8, 18 be submerged below the water surface 1a and reduce movement of the water surface 1a and effects by waves, and prevent damage of the generator unit 3 and the water turbine units 4.

### INDUSTRIAL APPLICABILITY

As described above, the power generation apparatus of the present invention is suitable for power generation using a stream of, for example, rivers, lakes, ocean, rapids, waterfalls, and agricultural and industrial canals. The power generation apparatus has a simple structure so that it can be small and light, and provides a stable power generation depending on the stream.

### DESCRIPTION OF THE REFERENCE NUMERALS

- 1: river
- 3: generator unit
- 4: water turbine unit
- 5: generator
- 7: support frame
- 8, 18: float

- 10,60: cable
- 14: universal joint
- 17: propeller

- 22: protective cover
- 48: spring
- 53: clutch

- 54,56: weight plate
- 55: support frame
- 61,62: cable
- 63: base plate
- 67: swivel link
- 68: float

- 72,73: support leg
- 74: anchor
- 78, 80: connecting frame
- 79, 81: fin
- 1a: water surface

## Claims

1. A power generation apparatus comprising:
a generator unit (3) containing a generator (5) anchored in an installation area;
a rotational means which rotates by a stream and associated with the generator; (5);
a plurality of water turbine units (4), each having a propeller (17) which is rotatable by the stream, provided along the stream;
wherein the water turbine units (4) are connected to the generator (5) unit via a rotatable shaft (13,15), and the rotational force of the propeller (17) is associated with the generator (5);
wherein the generator unit (3) and the water turbine units (4) are installed in water;
wherein the generator unit (3) and the water turbine units (4) are arranged in a line, and the generator unit (3) or the water turbine units (4) are arranged on an uppermost stream;
wherein the generator unit (3) or the water turbine units (4) are anchored to a fixed portion in water or on a bottom of an installation area via a cable; and
wherein the generator unit (3) and the water turbine units (4) are pivotably connected, and the water turbine units (4) are pivotably connected to each other,
**characterized in that**
the generator unit (3) and the water turbine units (4) each are provided on their top with a float (8,18), and
each float (8,18) is provided on a water surface.

2. The power generation apparatus according to claim 1, wherein the floats (8,18) are connected to each other via cables (61,62).

3. The power generation apparatus according to claim 1, wherein the float on an uppermost stream is anchored in water via the cable (10).

4. The power generation apparatus according to claim 1, further comprising a pair of support frames (7,55) for supporting the floats (8,18), and provided to protrude from a casing (6) of the generator unit (3) and a housing (16) of the water turbine units (4).

5. The power generation apparatus according to claim 4, wherein the pair of support frames (7,55) is provided to form a V-shape, and the pair of the floats (8,18) is arranged on top ends of the support frames (7,55) and to be parallel to each other, and the pair of the floats (8,18) are connected by a pair of connecting frames (78,80).

6. The power generation apparatus according to claim 5, wherein the pair of support frames (7,55) and the connecting frames (78,80) form a truss structure.

7. The power generation apparatus according to claim 5, further comprising fins (79,81) protruded from a back end of each of the floats (8,18).

8. The power generation apparatus according to claim 1, wherein the propeller (17) is a screw propeller or a blade propeller.

9. The power generation apparatus according to claim 8, wherein the casing (6) and the housing (16) are disposed below middle portions of the pair of floats (8,18), and the blade propeller (17) is disposed at a middle position of the floats (8,18) in the front and back direction.

10. The power generation apparatus according to claim 1, wherein the generator unit (3) and the water turbine units (4) are installed in rivers, lakes, ocean, rapids, waterfalls, and channels.

## Patentansprüche

1. Stromerzeugungsvorrichtung, welche Folgendes aufweist:
eine Generatoreinheit (3), die einen Generator (5) aufweist, der in einem Installationsbereich verankert ist;
eine Rotationseinrichtung, welche mittels einer Strömung rotiert und mit dem Generator (5) verbunden ist;
eine Vielzahl von Wasserturbineneinheiten (4), die jeweils einen Propeller (17) aufweisen, der durch die Strömung rotierbar ist und entlang der Strömung angeordnet ist;
wobei die Wasserturbineneinheit (4) mit dem Generator (5) über eine rotierbare Welle (13,15) verbunden ist, und die Rotationskraft des Propellers (17) mit dem Generator (5) in Verbindung steht;
wobei die Generatoreinheit (3) und die Wasserturbineneinheiten (4) in Wasser installiert sind;
wobei die Generatoreinheit (3) und die Wasserturbineneinheiten (4) in einer Linie angeordnet sind und die Generatoreinheit (3) oder die Wasserturbineneinheiten (4) auf einer obersten Strömung angeordnet sind;
wobei die Generatoreinheit (3) oder die Wasserturbineneinheiten (4) an einer festen Position im Wasser oder auf einem Boden eines Installationsbereichs über ein Kabel verankert sind; und
wobei die Generatoreinheit (3) und die Wasserturbineneinheiten (4) gelenkig bzw. drehbar verbunden sind, und die Wasserturbineneinheiten (4) gelenkig bzw. drehbar miteinander verbunden sind;
**dadurch gekennzeichnet, dass**
die Generatoreinheit (3) und die Wasserturbineneinheiten (4) jeweils auf ihrer Oberseite mit einem Schwimmkörper (8,18) versehen sind, und jeder Schwimmkörper (8,18) auf einer Wasseroberfläche vorgesehen ist.

2. Stromerzeugungsvorrichtung nach Anspruch 1, wobei die Schwimmkörper (8,18) mittels Kabeln (61,62) miteinander verbunden sind.

3. Stromerzeugungsvorrichtung nach Anspruch 1, wobei der Schwimmkörper auf einer obersten Strömung über das Kabel (10) im Wasser verankert ist.

4. Stromerzeugungsvorrichtung nach Anspruch 1, welche des Weiteren ein Paar von Stützrahmen (7,55) zum Abstützen der Schwimmkörper (8,18) aufweist, die so angeordnet sind, dass sie von einem Gehäuse (6) der Generatoreinheit (3) und einem Gehäuse (16) der Wasserturbineneinheiten (4) überstehen.

5. Stromerzeugungsvorrichtung nach Anspruch 4, wobei das Paar von Stützrahmen (7,55) so angeordnet ist, dass es eine V-Form bildet, und das Paar von Schwimmkörpern (8,18) auf oberen Enden der Stützrahmen (7,55) und parallel zueinander angeordnet ist, und das Paar von Schwimmkörpern (8,18) mittels eines Paars von Verbindungsrahmen (78,80) verbunden ist.

6. Stromerzeugungsvorrichtung nach Anspruch 5, wobei das Paar von Stützrahmen (7,55) und die Verbindungsrahmen (78,80) eine Gerippe- bzw. Fachwerkstruktur bilden.

7. Stromerzeugungsvorrichtung nach Anspruch 5, welche des Weiteren Finnen (79,81) aufweist, die über ein hinteres Ende von jedem der Schwimmkörper (8,18) überstehen.

8. Stromerzeugungsvorrichtung nach Anspruch 1, wobei der Propeller (17) ein Schraubenpropeller oder ein Blatt- bzw. Flügelpropeller ist.

9. Stromerzeugungsvorrichtung nach Anspruch 8, wobei das Gehäuse (6) und das Gehäuse (16) unterhalb von mittleren Abschnitten des Paars von Schwimmkörpern (8,18) angeordnet sind, und der Blattpropeller (17) an einer mittleren Position der Schwimmkörper (8,18) in der vorderen und hinteren Richtung angeordnet ist.

10. Stromerzeugungsvorrichtung nach Anspruch 1, wobei die Generatoreinheit (3) und die Wasserturbineneinheiten (4) in Flüssen, Seen, Meeren, Stromschnellen, Wasserfällen und Kanälen installiert sind.

## Revendications

1. Appareil générateur d'énergie comprenant :
une unité génératrice (3) contenant un générateur (5) ancrée dans une zone d'installation ;
des moyens d'entraînement en rotation qui tournent grâce à un courant et qui sont associés au générateur (5);
une pluralité d'unités de turbines à eau (4) ayant chacune une hélice (17) entraînée en rotation par le courant, montées le long du courant;
dans lequel les unités de turbines à eau (4) sont connectées au générateur (5) via un arbre rotatif (13, 15) et la force de rotation des hélices (17) est associée au générateur (5);
dans lequel l'unité génératrice (3) et les unités de turbines à eau (4) sont installées dans l'eau ;
dans lequel l'unité génératrice (3) et les unités de turbines à eau (4) sont disposées en ligne et l'unité génératrice (3) ou les unités de turbines à eau (4) sont disposées dans un courant supérieur ;
dans lequel l'unité génératrice (3) ou les unités de turbines à eau (4) sont ancrées dans une partie fixe dans l'eau ou sur un fond d'une zone d'installation via un câble ; et
dans lequel l'unité génératrice (3) et les unités de turbines à eau (4) sont couplées de façon pivotante, et les unités de turbines à eau (4) sont pivotantes entre elles,
**caractérisé en ce que**
l'unité génératrice (3) et les unités de turbines à eau (4) sont équipées chacune,
sur leur sommet, d'un flotteur (8, 18), et chacun des flotteurs (8, 18) est disposé à la surface de l'eau.

2. Appareil générateur d'énergie selon la revendication 1, **caractérisé en ce que**, les flotteurs (8, 18) sont liés les uns aux autres via des câbles (61, 62).

3. Appareil générateur d'énergie selon la revendication 1, **caractérisé en ce que**, le flotteur sur le courant supérieur est ancré au moyen du câble (10).

4. Appareil générateur d'énergie selon la revendication 1, comportant en outre une paire de cadres de support (7, 55) pour supporter les flotteurs (8, 18) et agencés pour être en proéminence par rapport à un caisson (6) de l'unité génératrice (3) et un caisson (16) des unités de turbines à eau (4).

5. Appareil générateur d'énergie selon la revendication 4, dans lequel la paire de cadres de support (7, 55) est agencée pour avoir une forme en V, et la paire de flotteurs (8, 18) est montée sur les extrémités supérieures des cadres de support (7, 55) et pour être parallèles entre eux, et la paire de flotteurs (8, 18) sont liés par une paire de cadres de connexion (78, 80).

6. Appareil générateur d'énergie selon la revendication 5, dans lequel la paire de cadres de support (7, 55) et les cadres de connexion (78, 80) constituent une structure armée.

7. Appareil générateur d'énergie selon la revendication 5, comportant en outre des dérives (79, 81) en protubérance par rapport à chaque extrémité arrière de chacun des flotteurs (8, 18).

8. Appareil générateur d'énergie selon la revendication 1, dans lequel l'hélice (17) est une hélice à vis ou à pales.

9. Appareil générateur d'énergie selon la revendication 8, dans lequel le caisson (6) et le caisson (16) sont disposés en-dessous des parties médianes de la paire de flotteurs (8, 18) et l'hélice à pales (17) est montée dans une position médiane des flotteurs (8, 18), dans la direction avant-arrière.

10. Appareil générateur d'énergie selon la revendication 1, dans lequel l'unité génératrice (3) et les unités de turbines à eau (4) sont installées dans des rivières, des lacs, des océans, des rapides, des cascades et des canaux.
